# EUROPÄISCHE PATENTANMELDUNG

(11) **EP 4 790 264 A1**
(43) Veröffentlichungstag der Anmeldung: **12.08.2026**
(21) Anmeldenummer: 25218802.4
(22) Anmeldetag: 26.11.2025
(51) Int. Cl.: F15B 15/20, F15B 15/26, F16H 63/34, F15B 13/043

(54) **HYDRAULIKAKTOR**

(30) Priorität: 06.02.2025 DE 102025104481
(71) Anmelder: SVM Schultz Verwaltungs-GmbH & Co. KG, 87700 Memmingen (DE)
(72) Erfinder: HERZ, Paul Philipp, 88260 Argenbühl (DE)
(74) Vertreter: Patentanwälte Olbricht, Buchhold, Keulertz Partnerschaft mbB

(57) **Zusammenfassung**

Vorgeschlagen wird ein Hydraulikaktor (2), der von einer Längsachse (L) durchsetzt ist, wobei dessen Hauptventilschieber (14), Pilotventilschieber (16) und Aktorkolben (18) koaxial miteinander sind.

## Beschreibung

Die Erfindung betrifft einen Hydraulikaktor gemäß Anspruch 1 und dessen Betriebsverfahren in Anspruch 10.

Aus der Praxis sind vorgesteuerte Hydraulikaktoren bekannt. Deren Aktorkolben kann allerdings oftmals nur sehr langsam eingefahren werden. Bei bekannten Hydraulikaktoren muss die Leckage an vielen Leckagestellen aufwändig konstruktiv minimiert werden. Ferner sind bekannte Hydraulikaktoren bauraumintensiv.

Aufgabe der Erfindung ist daher die entsprechende Verbesserung des Stands der Technik.

Diese Aufgabe ist gelöst mit dem Hydraulikaktor gemäß Anspruch 1 und dessen Betriebsverfahren gemäß Anspruch 10. Ausgestaltungen sind Gegenstand der Offenbarung.

Erfindungsgemäß wird ein Hydraulikaktor vorgeschlagen, der von einer Längsachse durchsetzt ist, umfassend
- eine Gehäuse mit einem Einlass und einem Auslass,
- einen ersten Fluidpfad vom Einlass zum Auslass,
- einen zweiten Fluidpfad vom Einlass zum Auslass,
- einen Hauptventilschieber, der entlang der Längsachse zwischen einer einfachen Freigabestellung verstellbar ist, in welcher der erste Fluidpfad oder der zweite Fluidpfad freigegeben und der jeweils andere Fluidpfad geschlossen ist, und/oder einer doppelten Freigabestellung verstellbar ist, in welcher der erste Fluidpfad und der zweite Fluidpfad freigegeben sind, und einer Schließstellung verstellbar ist, in welcher der erste Fluidpfad und der zweite Fluidpfad geschlossen sind, und
- einen Pilotventilschieber, der koaxial mit dem Hauptventilschieber angeordnet ist und entlang der Längsachse zwischen einer Freigabestellung verstellbar ist, in welcher der zweite Fluidpfad freigegeben ist, und einer Schließstellung verstellbar ist, in welcher der zweite Fluidpfad geschlossen ist, und
- einen Aktorkolben, der koaxial mit dem Hauptventilschieber angeordnet ist und entlang der Längsachse durch aus dem Einlass anstehenden Fluiddruck verstellbar ist zwischen einer Einzugsstellung und eines Ausfahrstellung.

Der Hydraulikaktor kann eine Parksperre oder Teil einer Parksperre sein.

Der mittels Pilotventilschieber vorgesteuerte Hydraulikaktor baut durch die koaxiale Bauweise von Hauptventilschieber, Pilotventilschieber und Aktorkolben sehr klein, insbesondere im Durchmesser. Die Koaxialität kann sich auf die Anordnung und oder Verstellbarkeit beziehen. Durch das Zusammenwirken der zwei Ventilschieber und zwei Fluidpfade kann der Hydraulikaktor mehrere Zustände einnehmen und hochfunktional sein.

Eine Zustandsänderung kann wie folgt erfolgen. Wird der Pilotventilschieber in seine Schließstellung gebracht, wird der zweite Fluidpfad dadurch geschlossen (und die Verbindung zwischen Einlass und Auslass via des zweiten Fluidpfads getrennt), so dass der gesamte Volumenstrom über den ersten Fluidpfad fließt. Es bildet sich dadurch eine höhere Druckdifferenz über dem Hauptventilschieber aus, sodass sich dadurch der Hauptventilschieber in seine doppelte Schließstellung verstellen kann. Strömungskräfte können diesen Effekt verstärken. Der Hauptventilschieber schließt in seiner doppelten Schließstellung den ersten und auch den zweiten Fluidpfad. Es besteht nun keine Verbindung zwischen Einlass und Auslass. Durch das Verschließen der beiden Fluidpfade kann durch am Einlass anstehendes Fluid Druck aufgebaut werden, um den Aktorkolben aus seiner Einzugsstellung in seine Ausfahrstellung zu verbringen.

Der Hydraulikaktor kann im Grundzustand vom Einlass in Richtung Auslass durchströmt werden. Der Volumenstrom teilt sich auf die beiden Fluidpfade auf. Der Volumenstrom kann mittels Hauptventilschieber und Pilotventilschieber gesteuert werden. Einlass und Auslass sind via der Fluidpfade fluidisch verbunden, vorzugsweise ausschließlich via der zwei Fluidpfade. Das reduziert einen Bauraumbedarf. Solange einer der Ventilschieber in Schließstellung ist, ist die Fluidverbindung zwischen Einlass und Auslass entlang des entsprechenden Fluidpfads unterbrochen (der entsprechende Fluidpfad ist vollständig geschlossen) - der Volumenstrom im entsprechenden Fluidpfad beträgt Null oder leckagebedingt annähernd Null.

Ist der Hauptventilschieber in seiner Freigabestellung, ist der jeweilige Fluidpfad am Hauptventilschieber freigegeben. Ist der Hauptventilschieber in seiner Schließstellung, ist der jeweilige Fluidpfad am Hauptventilschieber geschlossen - der Volumenstrom im entsprechenden Fluidpfad beträgt Null oder leckagebedingt annähernd Null. Der Hauptventilschieber kann (nur) in den ersten Fluidpfad wahlweise hereingestellt (bis zur Schließstellung) und herausgestellt werden. Der Hauptventilschieber kann in den ersten Fluidpfad und den zweiten Fluidpfad wahlweise hereingestellt (bis zur Schließstellung) und herausgestellt werden. Ist ein Fluidpfad von einem der beiden Ventilschieber geschlossen und von dem anderen freigegeben, kann der gesamte Fluidpfad als teilgeöffnet bezeichnet werden. Denkbar ist, dass der Hauptventilschieber so ausgebildet und/oder angeordnet ist, dass er von am Einlass oder im ersten Ventilraum anstehenden Fluiddruck in seine Schließstellung gedrückt und/oder dort gesichert werden kann. Denkbar ist, dass der Hauptventilschieber eine Schließstellungsdruckfläche aufweist. Die Schließstellungsdruckfläche kann dem am Einlass oder im ersten Ventilraum anstehenden Fluiddruck exponiert sein. Dadurch ist eine schnelle Verstellung ermöglicht, vorzugsweise von der Vorschlussstellung in die Schließstellung. Denkbar ist, dass die Schließstellungsdruckfläche in Schließstellung des Hauptventilschiebers den ersten Ventilraum begrenzt. Dadurch kann die Schließstellung gesichert werden. Anstehender Druck auf die Schließstellungsdruckfläche kann in Schließstellung des Hauptventilschiebers selbigen in seiner Schließstellung sichern.

Ist der Pilotventilschieber in seiner Freigabestellung, ist der jeweilige Fluidpfad am Pilotventilschieber freigegeben. Ist der Pilotventilschieber in seiner Schließstellung, ist der jeweilige Fluidpfad am Pilotventilschieber geschlossen - der Volumenstrom im entsprechenden Fluidpfad beträgt Null oder leckagebedingt annähernd Null. Der Pilotventilschieber kann (nur) in den zweiten Fluidpfad wahlweise hereingestellt (bis zur Schließstellung) und herausgestellt werden.

Der erste Fluidpfad ist verschieden zum zweiten Fluidpfad. Denkbar ist, dass sich der erste Fluidpfad erstreckt vom Einlass in einen ersten Ventilraum und/oder in einen dritten Ventilraum und dann zum Auslass. Denkbar ist, dass sich der zweite Fluidpfad erstreckt vom Einlass in einen/den ersten Ventilraum und/oder in einen zweiten Ventilraum und/oder in einen/den dritten Ventilraum und dann zum Auslass. Die Nutzung gemeinsamer Räume senkt einen Bauraumbedarf. Der Einlass kann an den ersten Ventilraum anschließen, vorzugsweis unmittelbar zur Bauraumreduzierung. Der Auslass kann an den dritten Ventilraum anschließen, vorzugsweis unmittelbar zur Bauraumreduzierung. Der erste Ventilraum kann via der ersten Fluidöffnung mit dem zweiten Ventilraum fluidisch verbunden sein. Der zweite Ventilraum kann via der zweiten Fluidöffnung mit dem dritten Ventilraum fluidisch verbunden sein. Der erste Ventilraum kann über die Steuerkante mit dem dritten Ventilraum fluidisch verbunden sein. Alle diese Ausgestaltungen führen zu einer kompakten Bauform.

Das Gehäuse kann das Außengehäuse des Hydraulikaktors sein. Das Gehäuse kann einen Elektromagneten beinhalten. Der Elektromagnet kann ein Linearmagnet sein. Der Elektromagnet und/oder der Magnetanker und/oder die Ankerstange kann/können koaxial mit dem Hauptventilschieber sein. Der Magnetanker und/oder die Ankerstange kann/können entlang der Längsachse verstellbar sein. Das reduziert einen Bauraumbedarf. Die Ankerstange kann am Magnetanker befestigt und damit verstellbar sein. Der Elektromagnet kann stirnseitig am Gehäuse angeordnet sein oder ein stirnseitiges Ende des Gehäuses bilden. Der Hydraulikaktor kann den Elektromagnet umfassen.

Der Pilotventilschieber kann mittels einer Pilotventilschieberfeder in eine seiner Stellungen vorgespannt sein, vorzugsweise in seiner Freigabestellung. Der Pilotventilschieber kann mit dem Magnetanker und/oder der Ankerstange verbunden oder daran beseitigt sein. Er ist dadurch in eine seiner Stellungen verstellbar, vorzugsweise in seiner Schließstellung. Der Pilotventilschieber und der Hauptventilschieberfeder können separate Teile sein. Die Pilotventilschieberfeder kann den Magnetanker und/oder die Ankerstange eine stromlose Stellung vorspannen, vorzugsweise ist der Magnetanker und/oder die Ankerstange bei stromlosem Elektromagneten herausgestellt. Bei Bestromung kann der Magnetanker und/oder die Ankerstange in die Spule des Elektromagneten hereingestellt werden. Da die Pilotventilschieberfeder die Funktion der Ankerfeder übernehmen kann, kann auf eine dezidierte Ankerfeder zur Bauteilreduzierung verzichtet werden. Der Pilotventilschieber und der Hauptventilschieber sind separate Teile und/oder unabhängig voneinander verstellbar.

Der Hauptventilschieber kann mittels einer Hauptventilschieberfeder in eine seiner Stellungen vorgespannt sein, vorzugsweise in seine einfache Freigabestellung. Der Pilotventilschieber kann mit dem Magnetanker und/oder der Ankerstange verbunden sein, um in eine seiner Stellungen verstellbar zu sein, vorzugsweise in seiner Schließstellung.

Der Aktorkolben kann mittels einer Aktorkolbenfeder in eine seiner Stellungen vorgespannt sein, vorzugsweise in seine Einzugsstellung. Der Aktorkolben kann eine Druckfläche aufweisen, welche aus dem Einlass anstehendem Fluid exponiert ist, vorzugsweise den ersten Ventilraum begrenzt. Dies dient seiner schnellen Verstellung. In seiner Einzugsstellung ist der Aktorkolben in das Gehäuse zurückgestellt. In seiner Ausfahrstellung ist der Aktorkolben aus dem Gehäuse herausgestellt.

Weiterbildungsgemäß kann vorgesehen sein, dass der Aktorkolben in seiner Einzugsstellung am Hauptventilschieber anliegt und ihn dadurch innerhalb dessen einfacher Freigabestellung und/oder doppelter Freigabestellung in eine Vorschlussstellung verbringen kann, vorzugsweise ist in Vorschlussstellung der Volumenstrom des ersten Fluidpfads größer als der Volumenstrom des zweiten Fluidpfads, vorzugsweise aufgrund der Vorschlussstellung.

Der Aktorkolben definiert aufgrund des Anliegens am Hauptventilschieber einen (ersten) Hauptventilschieberanschlag. Der Aktorkolben kann daher in seiner Einzugsstellung mit dem Hauptventilschieber in einer seiner beiden Freigabestellungen gekoppelt sein. Das Anliegen kann eine schwimmende Verbindung sein. Der Aktorkolben und/oder der Hauptventilschieber kann/können jeweils Anlageflächen aufweisen, die einander zugewandt sind, vorzugsweise senkrecht zur Längsachse verlaufen. Das verhindert Querkräfte. Denkbar ist, dass

Die Anlageposition kann federvorgespannt sein, vorzugsweise durch die Hauptventilschieberfeder oder die Aktorkolbenfeder, weiter bevorzugt durch die Hauptventilschieberfeder und Aktorkolbenfeder, welche in entgegengesetzte Richtungen aufeinander zu wirken. Denkbar ist, dass die Aktorkolbenfeder stärker als die Hauptventilschieberfeder ist. Denkbar ist, dass ein Kräftegleichgewicht zwischen der Aktorkolbenfeder und der Hauptventilschieberfeder die Anlageposition und/oder Vorschlussstellung definiert.

Denkbar ist, dass der Aktorkolben in seiner Ausfahrstellung nicht am Hauptventilschieber anliegt bzw. dazu axial beabstandet ist. Das vergrößert den Stellweg des Aktorkolbens und ermöglicht dem Hauptventilschieber die Übernahme weiterer Funktionen.

Die Vorschlusstellung dient der Reduzierung von Stellzeiten. Die Vorschlusstellung kann eine Position des Hauptventilschiebers sein, aus welcher er aufgrund von am Eingang oder im ersten Fluidpfad anstehenden Fluiddruck oder einer Druckdifferenz über dem Hauptventilschieber in seine Schließstellung gedrückt werden kann. Die Druckdifferenz kann sich daraus ergeben, dass der Volumenstrom des ersten Fluidpfads größer ist als der Volumenstrom des zweiten Fluidpfads.

Die Vorschlusstellung oder der (erste) Hauptventilschieberanschlag kann Element eines Flip-Flop-Ventils sein. Das Flip-Flop-Ventil kann der Ansteuerung des Aktorkolbens dienen. Aufgrund des Anliegens vom Aktorkolben am Hauptventilschieber ist eine Kopplung zwischen Aktorkolben und Hauptventilschieber, aufgrund der das Flip-Flop-Ventil nur in Einzugsstellung des Aktorkolbens aktivierbar sein kann / ist. Denkbar ist, dass die Vorschlusstellung und/oder das Anliegen die Aktivierung des Flip-Flop-Ventils zulässt.

Weiterbildungsgemäß kann vorgesehen sein, dass der Hydraulikaktor ein Verrastmittel umfasst, umfassend
- ein Verdrängungselement, vorzugsweise einen Kegel oder Konus, vorzugsweise ist das Verdrängungselement am Pilotventilschieber angeordnet,
- zumindest eine Rastaufnahme, vorzugsweise ist die zumindest eine Rastaufnahme, vorzugsweise beide Rastaufnahmen am Aktorkolben angeordnet, und
- zumindest ein Rastelement, vorzugsweise eine Kugel, wobei das Rastelement von dem Verdrängungselement in die Rastaufnahme verdrängbar ist, um den Aktorkolben in Axialrichtung zu verrasten.

Der Hydraulikaktor kann mindestens ein Rastelement aufweisen und der Aktorkolben kann eine erste Rastaufnahme und eine zweite Rastaufnahme aufweisen. Jeder Rastaufnahme kann ein Rastelement zugeordnet sein. Der Aktorkolben kann durch das haltende Zusammenwirken des mindestens einen Rastelements mit einer der entsprechenden Rastaufnahmen festlegbar sein. Dadurch kann eine Verstellung des Aktorkolbens in Axialrichtung in einfacher Weise gesperrt werden. In Verdrängungsstellung kann das zumindest eine Rastelement zugleich in einer ortsfesten Rastöffnung und der grundsätzlich längsbeweglichen entsprechenden Rastaufnahme angeordnet sein. Da das Verdrängungselement das Rastelement daran hindert, aus der Rastaufnahme zu gelangen, ist der Aktorkolben in Axialrichtung verrastet.

Denkbar ist, dass jede Rastaufnahme eine Ausdrängschräge aufweist. Dies kann dazu dienen, um bei Längsverstellung der Rastaufnahme während Entdrängungsstellung des Verdrängungselements das entsprechende Rastelement aus der Rastaufnahme zu verbringen.

Denkbar ist, dass das/die Rastelement(e) wahlweise in die erste Rastaufnahme und zweite Rastaufnahme gedrängt werden können. Dadurch kann die Anzahl der Rastelement klein gehalten werden. Denkbar ist, dass das Drängen des/der Rastelement(e) in die erste(n) Rastaufnahme(n) den Aktorkolben in seiner Einzugsstellung verrastet. Denkbar ist, dass das Drängen des/der Rastelement(e) in die zweite(n) Rastaufnahme(n) den Aktorkolben in seiner Ausfahrstellung verrastet.

Das Verdrängungselement kann entlang der Längsachse und/oder koaxial mit dem Hauptventilschieber angeordnet und verstellbar sein zwischen einer Verdrängungsstellung, in der das/die Rastelement(e) in die jeweilige Rastaufnahme gedrängt wird, und einer Entdrängungsstellung, in welcher das/die Rastelement(e) aus der jeweilige Rastaufnahme gelangen kann. In Verdrängungsstellung kann der Aktorkolben in Axialrichtung verrastet sein. In Entdrängungsstellung kann der Aktorkolben in Axialrichtung unverrastet sein bzw. längsbeweglich sein.

Das Verdrängungselement kann mit dem Magnetanker und/oder der Ankerstange des Elektromagneten und/oder dem Pilotventilschieber fest verbunden und/oder einstückig damit ausgebildet sein. Alternativ kann es ein separates Teil dazu sein. Das Verdrängungselement ist sodann mit der Verstellung von Magnetanker und/oder Ankerstange und/oder Pilotventilschieber zwischen der Verdrängungsstellung und der Entdrängungsstellung verstellbar. Die ohnehin zeitsensible Verrastung des Aktorkolbens kann nun schnell und zuverlässig erfolgen. Die Verbindung zwischen Verdrängungselement und insb. Pilotventilschieber führt dazu, dass beide in relativer Ruhe zueinander sind. Es ist eine vorteilhafte Kopplung zwischen der Pilotventilfunktion und Verrastfunktion geschaffen. Ein separates Ver- und Entrasten ist somit nicht nötig.

Denkbar ist, dass der Pilotventilschieber und das Verdrängungselement derart ausgebildet und/oder angeordnet sind, dass die Freigabestellung des Pilotventilschiebers und die Verdrängungsstellung des Verdrängungselement gleichzeitig gegeben sind. Diese Kopplung ist insbesondere durch voran genannte Ausgestaltung zu realisieren.

Denkbar ist, dass der Pilotventilschieber und das Verdrängungselement derart ausgebildet und/oder angeordnet sind, dass die Schließstellung des Pilotventilschiebers und die Entdrängungsstellung des Verdrängungselement gleichzeitig gegeben sind. Diese Kopplung ist insbesondere durch voran genannte Ausgestaltung zu realisieren.

Das Verdrängungselement dient insbesondere dazu, das zumindest eine Rastelement je nach seiner Lage radial auswärts in eine Rastaufnahme des Kolbens zu drücken (Verdrängungsstellung) oder eben nicht radial auswärts zu drücken (Entdrängungsstellung). Bei entsprechender Stellung des Verdrängungselements wird dadurch eine Verrastung des Aktorkolbens erreicht.

Weiterbildungsgemäß kann vorgesehen sein, dass der Hydraulikaktor einen/den Elektromagneten umfasst, welcher den Pilotventilschieber entlang der Längsachse verstellen kann, vorzugsweise ist der Pilotventilschieber mit dem Magnetanker oder der Ankerstange verbunden, vorzugsweise fest verbunden. Die Verbindung kann eine formschlüssige, kraftschlüssige oder stoffschlüssig Verbindung oder eine Kombination daraus sein. Denkbar ist eine einstückige Ausführung von Pilotventilschieber mit Magnetanker oder Ankerstange.

Da sowohl der Pilotventilschieber als auch das Verdrängungselement mit dem Magnetanker und/oder der Ankerstange verbunden sein können, können beide mit dem Elektromagneten verstellt werden. Denkbar ist, dass der Pilotventilschieber in seiner Freigabestellung ist bei unbestromter Magnetspule des Elektromagneten. Dadurch kann bei Stromausfall eine fluidische Verbindung zwischen Einlass und Auslass frei sein. Das ist insbesondre bei Fluidsystem von Vorteil, in welchen der Hydraulikaktor im regulären Fluss angeordnet ist.

Denkbar ist, dass ein (erster) Ausgleichskanal ausgebildet ist zwischen Magnetanker und Ankerstange. Denkbar ist, dass ein (zweiter) Ausgleichskanal ausgebildet ist zwischen Ankerstange und Pilotventilschieber und/oder Verdrängungselement. Der Kanal kann sich in Axialrichtung erstrecken. Durch den jeweiligen Ausgleichskanal kann fluid bei Verstellung strömen, wodurch ein Widerstand reduziert und eine Verstellgeschwindigkeit erhöht ist.

Weiterbildungsgemäß kann vorgesehen sein, dass der Hydraulikaktor eine Steuerkante umfasst, die mit dem Hauptventilschieber den Volumenstrom des ersten Fluidpfads einstellen kann. Die Steuerkante kann auch dem Schließen des ersten Fluidpfads dienen. Denkbar ist, dass der Hauptventilschieber in seiner Vorschlussstellung in Richtung der Steuerkante druckbeaufschlagt ist durch das Anliegen am Aktorkolben. Die Steuerkante kann vom Gehäuse und/oder oder einem ins Gehäuse eingesetzten Einsatz ausgebildet sein. Das dient einer kompakten Bauweise.

Weiterbildungsgemäß kann vorgesehen sein, dass der Hydraulikaktor eine Innenwandung umfasst, vorzugsweise eine Innenhülse, innerhalb des Gehäuses, wobei die Innenwandung den Hauptventilschieber führen kann. Die Innenwandung kann innen- oder außenumfangsseitig eine Führungsfläche für den Hauptventilschieber aufweisen. Die dortige Führung reduziert eine Bauteileanzahl und einen Bauraumbedarf. Die Innenhülse kann ein Hohlzylinder sein.

Die Innenwandung kann einen (zweiten) Hauptventilschieberanschlag aufweisen. Denkbar ist, dass der Hauptventilschieber in seiner einfachen Freigabestellung am (zweiten) Hauptventilschieberanschlag anliegt. Denkbar ist aus Gründen der Bauraumreduzierung, dass dem Hauptventilschieber in eine Axialrichtung zwei unterschiedliche Anschläge ausgebildet sind. Der erste dieser Anschläge kann der (erste) Hauptventilschieberanschlag am Aktorkolben sein. Der zweite dieser Anschläge kann der (zweite) Hauptventilschieberanschlag an der Innenwandung oder dem Gehäuse sein. Denkbar ist, dass der Hauptventilschieber in Abhängigkeit der Stellung des Aktorkolbens gegen die Anschläge anliegt. Ist der Aktorkolben in seiner Einzugsstellung, ist denkbar, dass der Hauptventilschieber nur gegen den (ersten) Hauptventilschieberanschlag am Aktorkolben anliegen kann. Ist der Aktorkolben in seiner Ausfahrstellung, ist denkbar, dass der Hauptventilschieber nur gegen den (zweiten) Hauptventilschieberanschlag an der Innenwandung oder dem Gehäuse anliegen kann.

Denkbar ist, dass der Hydraulikaktor in eine Vollöffnungsstellung bringbar ist, in welchem der Durchfluss des Fluids vom Einlass zum Auslass maximal ist und der Strömungswiderstand minimal ist. Denkbar ist, dass der Hauptventilschieber in seiner einfachen oder doppelten Freigabestellung die Vollöffnungsstellung realisiert. Denkbar ist, dass in Vollöffnungsstellung der Pilotventilschieber in seiner Freigabestellung ist. Dies reduziert den Strömungswiderstand.

Denkbar ist, dass der Hauptventilschieber, vorzugsweise in seiner einfachen Schließstellung und/oder in Vollöffnungsstellung, die erste Fluidöffnung verschließt und dadurch den zweiten Fluidpfad schließt. Sodann kann/muss der gesamte Volumenstrom über den ersten Fluidpfad fließen. Das hat den Vorteil, dass der Schmutzeintrag über den Pilotventilschieber geringer ist. Zusätzlich kann Bauraum eingespart werden.

Die Innenwandung kann eine Abstützfläche für eine/die Hauptventilschieberfeder ausbilden. Die dortige Fläche reduziert eine Bauteileanzahl und einen Bauraumbedarf.

Die Innenwandung kann den Pilotventilschieber führen. Die Innenwandung kann innen- oder außenumfangsseitig eine Führungsfläche für den Pilotventilschieber aufweisen. Die dortige Führung reduziert eine Bauteileanzahl und einen Bauraumbedarf. Denkbar ist in vorteilhafter Weise, dass der Pilotventilschieber innenumfangsseitig und der Hauptventilschieber außenumfangsseitig (oder andersherum) an der Innenwandung geführt ist. Die Stellwege von Pilotventilschieber und Hauptventilschieber können in Radialrichtung überlappen. Das ermöglicht eine kompakte Bauweise.

Die Innenwandung kann eine Abstützfläche für eine/die Pilotventilschieberfeder ausbilden. Die dortige Fläche reduziert eine Bauteileanzahl und einen Bauraumbedarf.

Die Innenwandung kann den Aktorkolben führen. Die Innenwandung kann innen- oder außenumfangsseitig eine Führungsfläche für den Aktorkolben aufweisen. Die dortige Führung reduziert eine Bauteileanzahl und einen Bauraumbedarf. Denkbar ist in vorteilhafter Weise, dass der Aktorkolben und der Hauptventilschieber auf der gleichen Seite (innen- oder außenumfangsseitig) der Innenwandung geführt sind, vorzugsweise außenumfangsseitig. Dadurch kann die Anlage des Aktorkolbens am Hauptventilschieber kompakt verwirklicht werden.

Die Innenwandung kann einen Einzugsanschlag für den Aktorkolben aufweisen. Der Einzugsanschlag kann ein stirnseitiges Ende der Innenwandung sein, wodurch eine kompakte Bauweise erreicht ist. Denkbar ist, dass der Aktorkolben in seiner Einzugsstellung am Einzugsanschlag anliegt. Denkbar ist, dass das Anliegen des Aktorkolbens am Einzugsanschlag die Anlageposition und/oder Vorschlussstellung definiert.

Die Innenwandung kann eine erste Fluidöffnung aufweisen, welche den zweiten Fluidpfad führt und vom Hauptventilschieber und/oder Pilotventilschieber geschlossen und geöffnet werden kann. Die erste Fluidöffnung kann den zweiten Fluidpfad von einer Außenumfangsseite der Innenwandung zu einer Innenumfangsseite der Innenwandung führen. In vorteilhafter Weise kann die erste Fluidöffnung von beiden Ventilschiebern geschlossen werden, was gleichbedeutend mit der Trennung der Fluidverbindung zwischen Einlass und Auslass via des zweiten Fluidpfads ist. Diese Ausbildung dient einem kompakten aber zugleich hochfunktionalen Hydraulikaktor. Die erste Fluidöffnung kann geschlossen sein in der Schließstellung des Pilotventilschiebers. Die erste Fluidöffnung kann geschlossen sein in der einfachen Freigabestellung des Hauptventilschiebers. Die erste Fluidöffnung kann geöffnet sein, wenn der Pilotventilschieber in seiner Freigabestellung und der Hauptventilschieber in seiner doppelten Freigabestellung oder seiner Schließstellung ist.

Die Innenwandung kann eine zweite Fluidöffnung aufweisen, welche den zweiten Fluidpfad führt und (vorzugsweise nur) vom Hauptventilschieber geschlossen und geöffnet werden kann. Die zweite Fluidöffnung kann den zweiten Fluidpfad von einer Innenumfangsseite der Innenwandung zu einer Außenumfangsseite der Innenwandung führen. Das ermöglicht eine kompakte Bauweise. In vorteilhafter Weise kann die zweite Fluidöffnung nur vom Hauptventilschieber geschlossen werden, was gleichbedeutend mit der Trennung der Fluidverbindung zwischen Einlass und Auslass via des zweiten Fluidpfads ist. Diese Ausbildung dient einem kompakten aber zugleich hochfunktionalen Hydraulikaktor. Die zweite Fluidöffnung kann geschlossen sein in der Schließstellung des Hauptventilschiebers. Die zweite Fluidöffnung kann geöffnet sein, wenn der Hauptventilschiebers in seiner einfachen Freigabestellung ist und auch wenn er in seiner doppelten Freigabestellung ist.

Für den Fall, dass die erste Fluidöffnung geöffnet ist und der Hauptventilschieber in seiner Schließstellung ist, bleibt jedoch der den zweite Fluidpfad weiterhin durch den Hauptventilschieber geschlossen, sodass sich der Fluiddruck am Aktorkolben nicht abbauen kann. Der Aktorkolben kann in diesem Zustand verrastet sein. Die Verrastung ist somit von der hydraulischen Steuerung entkoppelt. Die komplette Trennung der Fluidverbindung zwischen Einlass und Auslass bleibt aufrechterhalten, obwohl der Pilotventilschieber die erste Fluidöffnung freigibt. Diese Schaltung kann als Flip-Flop-Schaltung des Flip-Flop-Ventils bezeichnet werden.

Die Innenwandung kann eine Rastöffnung aufweisen, in welcher das Rastmittel aufgenommen ist. Die Rastöffnung kann in Radialrichtung orientiert sein. Die Rastöffnung kann zur Aufnahme eines Rastelementes dienen. Jeder Rastöffnung kann ein Rastelement zugeordnet sein. Das Verdrängungselement kann die Rastelemente je nach Position in Radialrichtung nach außen durch die jeweilige Rastöffnung in die entsprechende Rastaufnahme drängen. Auch dadurch ist eine kompakte Bauweise ermöglicht.

Die Innenwandung und/oder der Hauptventilschieber kann/können kann eine Trennung zwischen dem ersten Fluidpfad und dem zweiten Fluidpfad ausbilden. Das ermöglicht eine kompakte Bauweise.

Die Innenwandung kann den zweiten Fluidpfad innenumfangsseitig führen, vorzugsweise von der ersten Fluidöffnung zu zweiten Fluidöffnung. Das ermöglicht eine kompakte Bauweise.

Die Innenwandung kann in Längsrichtung hinterschneidungsfrei sein. Abgesehen von eventuellen Fluidöffnungen. Dies ermöglicht eine kostengünstige Herstellung, insb. für den Fall der Einstückigkeit mit dem Gehäuse.

Die Innenwandung kann einends zum Aktorkolben offen sein. Das ermöglicht eine Fluidverbindung von der Außenumfangsseite der Innenwandung via einem/dem (dritten) Ausgleichskanal zur Innenumfangsseite der Innenwandung. Der Ausgleichskanal steigert eine Verstellgeschwindigkeit.

Die erste Fluidöffnung kann stromaufwärts des zweiten Fluidpfads zur zweiten Fluidöffnung angeordnet sein. Das ermöglicht eine kompakte Bauweise.

Die Ankerstange kann sich innerhalb der Innenwandung erstrecken und/oder im zweiten Fluidpfad angeordnet sein. Die Pilotventilfeder kann sich innerhalb der Innenwandung erstrecken und/oder im zweiten Fluidpfad angeordnet sein. Beides ermöglicht eine kompakte Bauweise.

Weiterbildungsgemäß kann vorgesehen sein, dass das Gehäuse den Hauptventilschieber führt. Das Gehäuse kann innenumfangsseitig eine Führungsfläche für den Hauptventilschieber aufweisen. Die dortige Führung reduziert eine Bauteileanzahl und einen Bauraumbedarf. Denkbar ist, dass das Gehäuse derart ausgestaltet ist, dass die Führung durch das Gehäuse nur in der Schließstellung des Hauptventilschiebers erfolgt. Dadurch kann eine umwegfreie Führung für den zweiten Fluidpfad durch das Gehäuse realisiert werden. Denkbar ist, dass das Gehäuse derart ausgestaltet ist, dass die Führung durch das Gehäuse den zweiten Fluidpfad schließt. Der Hauptventilschieber kann sich beispielsweise an der Steuerkante vorbei schieben, wodurch der zweite Fluidpfad an der Steuerkante schließbar ist. Alternativ kann ein Einsatz den Hauptventilschieber führen.

Das Gehäuse kann den Pilotventilschieber führen. Das Gehäuse kann innenumfangsseitig eine Führungsfläche für den Pilotventilschieber aufweisen. Die dortige Führung reduziert eine Bauteileanzahl und einen Bauraumbedarf.

Das Gehäuse kann den Aktorkolben führen. Das Gehäuse kann innenumfangsseitig eine Führungsfläche für den Aktorkolben aufweisen. Die dortige Führung reduziert eine Bauteileanzahl und einen Bauraumbedarf.

Das Gehäuse kann zumindest einen Hauptventilschieberanschlag für den Hauptventilschieber aufweisen. Denkbar ist, dass das Gehäuse einen/den (zweiten) Hauptventilschieberanschlag und/oder einen/den (dritten) Hauptventilschieberanschlag ausbildet. Denkbar ist, dass der Hauptventilschieber in seiner einfachen Freigabestellung am (zweiten) Hauptventilschieberanschlag anliegt. Denkbar ist, dass der Hauptventilschieber in seiner Schließstellung am (dritten) Hauptventilschieberanschlag anliegt. Der zweite Hauptventilschieberanschlag und der dritte Hauptventilschieberanschlag können einander zugewandt angeordnet sein und/oder die Enden des Stellwegs des Hauptventilschiebers definieren. Denkbar ist, dass entlang der Längsachse der erste Hauptventilschieberanschlag zwischen dem zweiten und dritten Hauptventilschieberanschlag ausgebildet ist. Dies dient einer kompakten Bauweise und kann der Verwirklichung des Flip-Flop-Ventils dienen.

Das Gehäuse kann eine Abstützfläche für eine/die Hauptventilschieberfeder ausbilden. Die dortige Fläche reduziert eine Bauteileanzahl und einen Bauraumbedarf.

Das Gehäuse kann eine Abstützfläche für eine/die Pilotventilschieberfeder ausbilden. Die dortige Fläche reduziert eine Bauteileanzahl und einen Bauraumbedarf.

Das Gehäuse kann eine Abstützfläche für eine/die Aktorkolbenfeder ausbilden. Die dortige Fläche reduziert eine Bauteileanzahl und einen Bauraumbedarf.

Das Gehäuse kann den Einlass und den Auslass in entlang der Längsachse benachbart oder in Axialrichtung fluchtend aufweisen. Einlass und den Auslass sind somit auf identischer Seite, wodurch kurze Fluidpfade realisierbar sind und der Bauraumbedarf gering ist.

Das Gehäuse kann einen ersten Ventilraum und/oder einen zweiten Ventilraum und/oder einen dritten Ventilraum aufweisen oder ausbilden. Denkbar ist, dass der erste Ventilraum fluidisch mit dem zweiten Ventilraum und dem dritten Ventilraum verbunden ist, vorzugsweise unmittelbar. Denkbar ist, dass der zweite Ventilraum mit dem dritten Ventilraum fluidisch verbunden ist, vorzugsweise unmittelbar. Gerade die unmittelbare Verbindung führt zu einer kompakten Bauweise. Denkbar ist, dass die Steuerkante den ersten Ventilraum vom dritten Ventilraum trennt.

Denkbar ist, dass der erste Ventilraum außenumfangsseitig begrenzt ist vom Gehäuse und/oder innenumfangsseitig von der Innenwandung und/oder dem Hauptventilschieber und/oder einer/der Druckfläche des Aktorkolbens. Dadurch kann Fluid direkt nach Eintritt durch den Einlass auf die Druckfläche des Aktorkolbens wirken. Ein tiefes Eindringen des Fluiddrucks ist somit vermieden.

Denkbar ist, dass der zweite Ventilraum innerhalb der Innenwandung ausgebildet ist. Der zweite Ventilraum kann außenumfangsseitig von der Innenwandung begrenzt sein. Der zweite Ventilraum kann axial einends von einer/der Abstützfläche der Pilotventilfeder begrenzt und/oder axial anderenends von dem Pilotventilschieber begrenzt sein. Die dient einer Bauraumbedarfsreduktion.

Denkbar ist, dass der dritte Ventilraum außenumfangsseitig begrenzt ist vom Gehäuse und/oder innenumfangsseitig von der Innenwandung und/oder dem Hauptventilschieber.

Denkbar ist, dass die Innenwandung oder Innenhülse einstückig mit dem Gehäuse ausgebildet ist. Dies reduziert eine Bauteilanzahl.

Das Gehäuse kann einen Einzugsanschlag für den Aktorkolben aufweisen. Denkbar ist, dass der Aktorkolben in seiner Einzugsstellung am Einzugsanschlag anliegt. Denkbar ist, dass das Anliegen des Aktorkolbens am Einzugsanschlag die Anlageposition und/oder Vorschlussstellung definiert. Denkbar ist, dass nur einer von Innenwandung und Gehäuse einen Einzugsanschlag aufweist.

Weiterbildungsgemäß kann vorgesehen sein, dass der Aktorkolben einen Hülsenabschnitt aufweist. Der Hülsenabschnitt kann axial einends ausgebildet sein und/oder an der Innenwandung oder dem Gehäuse geführt sein. Vorzugsweise ist der Hülsenabschnitt an der Außenumfangsseite der Innenwandung geführt.

Der Aktorkolben oder Hülsenabschnitt kann zumindest eine Durchströmungsöffnung aufweisen, welche den zweiten Fluidpfad führen kann. Diese Ausgestaltung dient dem Zulassen eines Fluidstroms entlang des zweiten Fluidpfads in Anlagestellung am Hauptventilschieber.

Der Aktorkolben kann einen Scheibenabschnitt aufweisen. Der Scheibenabschnitt kann in Längsrichtung dicht sein und einen Hydraulikaktorinnenraum gegen ein Hydraulikaktorumfeld abdichten. Am Scheibenabschnitt kann der Hülsenabschnitt befestigt sein, wobei dies zu einer kompakten Bauweise führt. Der Scheibenabschnitt kann eine/die Druckfläche des Aktorkolbens ausbilden. Der Scheibenabschnitt kann an der Innenumfangsseite des Gehäuses geführt sein.

Der Aktorkolben oder Hülsenabschnitt kann innenumfangsseitig die zumindest eine Rastaufnahme aufweisen. Auch dies dient einer kompakten Bauweise, insb. im Durchmesser.

Weiterbildungsgemäß kann vorgesehen sein, dass der Hauptventilschieber eine Durchströmungsöffnung aufweist, welche den zweiten Fluidpfad führen kann. Diese Ausgestaltung dient dem Zulassen eines Fluidstroms entlang des zweiten Fluidpfads in Anlagestellung am Hauptventilschieber.

Der Hauptventilschieber kann einen Anschlagsflansch aufweisen. Dadurch kann die Schließstellung und/oder einfache Freigabestellung des Hauptventilschiebers definiert sichergestellt werden. Der Anschlagsflansch kann sich in Radialrichtung erstrecken. Der Anschlagsflansch kann am zweiten Hauptventilschieberanschlag und/oder am dritten Hauptventilschieberanschlag anliegen. Dadurch kann der Anschlagsflansch als Doppelanschlag dienen. Denkbar ist, dass der Anschlagsflansch eine Druckfläche aufweist, welche aus dem Einlass anstehendem Fluid exponiert ist. Dies dient seiner schnellen Verstellung von der Vorschlusstellung in seine Schließstellung.

Der Hauptventilschieber oder der Anschlagsflansch kann einen (vierten) Ausgleichskanal aufweisen. Vorzugsweise erstreckt sich der (vierte) Ausgleichskanal in Längsrichtung und/oder kann mit dem Hauptventilschieber im ersten Ventilraum bewegt werden. Der (vierte) Ausgleichskanal ist von Fluid durchströmbar, das bei Verstellung des Aktorkolbens in seine Einzugsstellung verdrängt wird. Liegt zeitgleich der Anschlagsflansch am (zweiten) Hauptventilschieberanschlag an, könnte ohne den (vierten) Ausgleichskanal die Fluidverdrängung nicht möglich sein oder die Fluidverdrängung zum Abheben des Anschlagsflansches am (zweiten) Hauptventilschieberanschlag führen. Der (vierte) Ausgleichskanal kann bei Anlage des Hauptventilschiebers (zweiten) Hauptventilschieberanschlag fluidisch durchströmbar sein. Der (vierte) Ausgleichskanal kann bei Anlage des Hauptventilschiebers am (dritten) Hauptventilschieberanschlag von selbigen geschlossen sein. Dies verhindert eine Leckage, sodass in Schließstellung des Hauptventilschiebers schnellstmöglich ein Fluiddruck zur Verstellung des Aktorkolbens aufgebaut werden kann.

Der Hauptventilschieber und der Pilotventilschieber können derart ausgebildet und/oder angeordnet sein, dass in einem Betriebszustand der Hauptventilschieber den ersten Fluidpfad und den zweiten Fluidpfad verschließt während der Pilotventilschieber den zweiten Fluidpfad freigibt und/oder zugleich den Aktorkolben in dessen Ausfahrstellung verriegelt. Dieser Betriebszustand kann bei unbestromtem Elektromagneten und/oder in federvorgespannter Freigabestellung des Pilotventilschiebers und/oder Verrastmittels vorliegen. Dadurch kann der Hydraulikaktor so geschalten werden, dass er auch bei Wegnahme eines Eingangsignals verschlossen bleibt. So kann der Aktor in Ausfahrstellung bei Wegnahme des Eingangssiganls zuverlässig verrastet werden.

Erfindungsgemäß wird zudem ein Betriebsverfahren vorgeschlagen. Der damit betriebene Hydraulikaktor kann ein offenbarungsgemäßer Hydraulikaktor sein. Das Betriebsverfahren umfasst zumindest die folgenden Schritte in der angegebenen Reihenfolge. Die einzelnen Schritte sind lediglich aus Gründen der einfachen Nachvollziehbarkeit Betriebszuständen zugeordnet, jedoch ist die Einteilung in Betriebszustände und deren Bezeichnung optional.

### Erster Zustand:

Der Hydraulikaktor befindet sich in einem Grundzustand, in welchem der erste Fluidpfad und der zweite Fluidpfad geöffnet sind und der Aktorkolben in seiner Einzugsstellung ist. Der Hauptventilschieber ist in seine Vorschlussstellung verbracht, in welcher der Volumenstrom des ersten Fluidpfads größer als der Volumenstrom des zweiten Fluidpfads ist. Aus diesem Grundzustand des Hydraulikaktors erfolgen nun die folgenden Schritte.

### Zweiter Zustand:

Es erfolgt ein Verbringen des Pilotventilschiebers aus seiner Freigabestellung in seine Schließstellung und dadurch Schließen des zweiten Fluidpfads.

### Dritter Zustand:

Es erfolgt ein Verbringen des Hauptventilschiebers durch aus dem Einlass anstehenden Fluiddruck in seine Schließstellung und dadurch Schließen des ersten Fluidpfads und des zweiten Fluidpfads.

### Vierter Zustand:

Es erfolgt ein Verbringen des Aktorkolbens durch aus dem Einlass anstehenden Fluiddruck in seine Ausfahrstellung.

### Fünfter Zustand:

Es erfolgt ein Verbringen des Pilotventilschiebers aus seiner Schließstellung in seine Freigabestellung und dadurch Freigeben des zweiten Fluidpfads.

### Sechster Zustand:

Es erfolgt ein Unterbrechen des Fluiddrucks auf den Hauptventilschieber und ein Verstellen des Hauptventilschiebers aus seiner Schließstellung in seine einfachen Freigabestellung oder doppelte Freigabestellung.

### Siebenter Zustand:

Es erfolgt ein Durchströmen des Hydraulikaktors vom Einlass zum Auslass entlang zumindest einem der beiden Fluidpfade. In diesem Zustand kann die Vollöffnungsstellung des Hydraulikaktors realisiert sein.

### Achter Zustand:

Es erfolgt ein Unterbrechen oder Verringern des Volumenstroms am Einlass und ein Verbringen des Pilotventilschiebers aus seiner Freigabestellung in seine Schließstellung und dadurch Schließen des zweiten Fluidpfads. Denkbar ist, dass das Verringern des Volumenstroms beispielsweise dann ausreichend sein kann, wenn der Hydraulikaktor unterhalb einer viskostitätsabhängigen Schaltschwelle des Hauptventilschiebers bleibt.

### Neunter Zustand:

Es erfolgt ein Verbringen des Aktorkolbens in seine Einzugsstellung und dadurch ein Verbringen des Hauptventilschiebers in seine Vorschlussstellung. Im Anschluss kann erneut der Grundzustand hergestellt werden. An den neunten Zustand kann sich der erste Zustand anschließen.

Die bereits oben bezüglich des Hydraulikaktors beschriebenen Vorteile ergeben sich analog auch für das Betriebsverfahren, worauf hiermit verwiesen wird. Weiterbildungsgemäße Ausgestaltungen des Betriebsverfahrens werden nachstehend nach Zuständen sortiert beschrieben.

### Erster Zustand:

Der Aktorkolben kann in seiner Einzugsstellung durch das Verrastmittel verrastet sein. Der Hauptventilschieber kann durch ein Anliegen am Aktorkolben (Vorschlusstellung) axialdistanziert zu seinem zweiten Hauptventilschieberanschlag sein. Die Aktorkolbenfeder drückt den Aktorkolben auf den Hauptventilschieber und/oder der Aktorkolben kann am Einzugsanschlag anliegen. Der Volumenstrom aus dem Einlass teilt sich auf die Teilvolumenströme über Pilotventilschieber oder erstem Fluidpfad und Hauptventilschieber oder zweitem Fluidpfad auf. Der Elektromagnet ist unbestromt.

Der Elektromagnet kann unbestromt sein. Der Hauptventilschieber kann in Vorschlussstellung sein. Der Pilotventilschieber kann in Freigabestellung sein. Das Verdrängungselement kann in Verdrängungsstellung sein. Der Aktorkolben kann in Einzugsstellung sein. Der erste Fluidpfad kann vom Einlass zum Auslass vollständig geöffnet sein. Der zweite Fluidpfad kann vom Einlass zum Auslass vollständig geöffnet sein. Der Volumenstrom am Einlass kann anstehen.

### Zweiter Zustand:

Das Verdrängungselement, welches mit dem Pilotventilschieber gekoppelt sein kann, kann in die Entdrängungsstellung verstellt werden. Das kann beispielsweise durch Bestromung des Elektromagneten und/oder gegen die Kraft der Pilotventilfeder erfolgen. Der Aktorkolben kann somit längsbeweglich sein. Gleichzeitig kann die erste Fluidöffnung vom Pilotventilschieber verschlossen werden, sodass der gesamte Volumenstrom über den Hauptventilschieber oder durch den ersten Fluidpfad geleitet wird. Durch die daraus resultierende höhere Druckdifferenz über den Hauptventilschieber und die höhere Strömungskraft an der Steuerkante des Hauptventilschiebers, kann dieser gegen die Kraft der Hauptventilschieberfeder geschlossen werden.

Der Elektromagnet kann bestromt sein. Der Hauptventilschieber kann (weiterhin) in Vorschlussstellung sein. Der Pilotventilschieber kann in Schließstellung kommen, vorzugsweise durch die Elektromagnetbestromung. Das Verdrängungselement kann in Entdrängungsstellung kommen, vorzugsweise durch die Elektromagnetbestromung. Der Aktorkolben kann (weiterhin) in Einzugsstellung sein. Der erste Fluidpfad kann (weiterhin) vom Einlass zum Auslass vollständig geöffnet sein. Der zweite Fluidpfad kann vom Pilotventilschieber und am Pilotventilschieber geschlossen sein. Der Volumenstrom am Einlass kann anstehen.

### Dritter Zustand:

Beide Fluidpfade sind geschlossen. Die Verbindung zwischen Einlass und Auslass ist somit komplett blockiert. Allerdings kann denkbar sein, dass am Einlass und im ersten Ventilraum weiterhin Fluiddruck ansteht. Dieser Fluiddruck kann den Hauptventilschieber in seine Schließstellung drücken. Der Elektromagnet kann weiterhin bestromt werden.

Der Elektromagnet kann (weiterhin) bestromt sein. Der Hauptventilschieber kann in Schließstellung kommen, vorzugsweise aufgrund von am Einlass und/oder im ersten Ventilraum anstehendem Fluiddruck. Der Pilotventilschieber kann (weiterhin) in Schließstellung sein, vorzugsweise durch die Elektromagnetbestromung. Das Verdrängungselement kann (weiterhin) in Entdrängungsstellung sein, vorzugsweise durch die Elektromagnetbestromung. Der Aktorkolben kann (weiterhin) in Einzugsstellung sein. Der erste Fluidpfad kann vom Hauptventilschieber und am Hauptventilschieber geschlossen sein. Der zweite Fluidpfad kann vom Pilotventilschieber und am Pilotventilschieber und/oder vom Hauptventilschieber und am Hauptventilschieber geschlossen sein. Der Volumenstrom am Einlass kann anstehen.

### Vierter Zustand:

Da beider Fluidpfade sind geschlossen sind, baut sich durch den weiterhin anstehenden Volumenstrom am Einlass ein Fluiddruck auf, vorzugsweise im ersten Ventilraum, der auf die Druckfläche des Aktorkolbens wirken und den Aktorkolben in seine Ausfahrstellung verstellen kann. Die Verstellung des Aktorkolbens kann gegen die Kraft der Aktorkolbenfeder erfolgen. Der Elektromagnet kann weiterhin bestromt werden.

Der Elektromagnet kann (weiterhin) bestromt sein. Der Hauptventilschieber kann (weiterhin) in Schließstellung sein, vorzugsweise aufgrund von am Einlass und/oder im ersten Ventilraum anstehendem Fluiddruck. Der Pilotventilschieber kann (weiterhin) in Schließstellung sein, vorzugsweise durch die Elektromagnetbestromung. Das Verdrängungselement kann (weiterhin) in Entdrängungsstellung sein, vorzugsweise durch die Elektromagnetbestromung. Der Aktorkolben kann in Ausfahrstellung verstellt werden, vorzugsweise aufgrund von am Einlass und/oder im ersten Ventilraum anstehendem Fluiddruck. Der erste Fluidpfad kann (weiterhin) vom Hauptventilschieber und am Hauptventilschieber geschlossen sein. Der zweite Fluidpfad kann (weiterhin) vom Pilotventilschieber und am Pilotventilschieber und/oder vom Hauptventilschieber und am Hauptventilschieber geschlossen sein. Der Volumenstrom am Einlass kann anstehen.

### Fünfter Zustand:

Der Aktorkolben ist in seine Ausfahrstellung verstellt und das Verdrängungselement kann in seine Verdrängungsstellung verstellt werden. Das kann durch Stromlosschaltung des Elektromagneten erfolgen. Die Kraft der Pilotventilfeder kann das Verdrängungselement in deren Verdrängungsstellung drücken. Der Aktorkolben ist verrastet. Die erste Fluidöffnung kann vom Pilotventilschieber wieder freigegeben werden. Allerdings kann der zweite Fluidpfad teilgeöffnet sein, denn zugleich verschließt der Hauptventilschieber in seiner Schließstellung die zweite Fluidöffnung und auch der erste Fluidpfad kann noch immer vom Hauptventilschieber geschlossen sein. Der Fluiddruck, der im ersten Ventilraum anstehen kann, am Aktorkolben kann sich nicht abbauen. Der Fluiddruck, der im ersten Ventilraum anstehen kann, drückt den Hauptventilschieber in dessen Schließstellung. Die Verrastung des Aktorkolbens ist somit von der hydraulischen Steuerung entkoppelt. Die Fluidverbindung zwischen Einlass und Auslass bleibt weiterhin geschlossen, obwohl der Pilotventilschieber die erste Fluidöffnung wieder freigibt. Diese Schaltung kann als Flip-Flop-Schaltung bezeichnet werden.

Der Elektromagnet kann unbestromt geschaltet werden. Der Hauptventilschieber kann (weiterhin) in Schließstellung sein, vorzugsweise aufgrund von am Einlass und/oder im ersten Ventilraum anstehendem Fluiddruck. Der Pilotventilschieber kann in Freigabestellung gelangen, vorzugsweise durch die Pilotventilschieberfeder. Das Verdrängungselement kann in Verdrängungsstellung gelangen, vorzugsweise durch die Pilotventilschieberfeder. Der Aktorkolben kann (weiterhin) in Ausfahrstellung sein, vorzugsweise aufgrund von am Einlass und/oder im ersten Ventilraum anstehendem Fluiddruck. Der erste Fluidpfad kann (weiterhin) vom Hauptventilschieber und am Hauptventilschieber geschlossen sein. Der zweite Fluidpfad kann zwar vom und am Pilotventilschieber freigegeben werden, kann aber (weiterhin) vom Hauptventilschieber und am Hauptventilschieber geschlossen sein, vorzugsweise an der zweiten Fluidöffnung. Der Volumenstrom am Einlass kann anstehen.

### Sechster Zustand:

Der Hauptventilschieber wird durch Abschalten des Volumenstroms am Einlass durch die Federkraft der Hauptventilschieberfeder aus seiner Schließstellung bewegt, vorzugsweise in seine einfache Freigabestellung. Auf seinem Stellweg kann der Hauptventilschieber die Stelle passieren, an der er in Vorschlusstellung verortet ist. Da nämlich der Aktorkolben in seiner Ausfahrstellung verrastet ist, kann er den Hauptventilschieber nicht in dessen Vorschlusstellung drücken. Der Hauptventilschieber kann die Vorschlusstellung entlang seiner Stellwegs überfahren. Der Hauptventilschieber kann am zweiten Hauptventilschieberanschlag anliegen und dadurch einen maximal großen Strömungsquerschnitt freigeben. In diesem Zustand kann die Vollöffnungsstellung des Hydraulikaktors realisiert sein.

Der Elektromagnet kann (weiterhin) unbestromt sein. Der Hauptventilschieber kann in einfache Freigabestellung gelangen, vorzugsweise aufgrund von Abschalten oder Reduzieren von am Einlass und/oder im ersten Ventilraum anstehendem Fluiddruck und/oder der Hauptventilschieberfeder. Der Pilotventilschieber kann (weiterhin) in Freigabestellung sein, vorzugsweise durch die Pilotventilschieberfeder. Das Verdrängungselement kann (weiter) in Verdrängungsstellung sein, vorzugsweise durch die Pilotventilschieberfeder. Der Aktorkolben kann (weiterhin) in Ausfahrstellung sein, vorzugsweise aufgrund der Verrastung. Der erste Fluidpfad kann vom Hauptventilschieber geöffnet werden und vom Einlass zum Auslass vollständig geöffnet sein. Der zweite Fluidpfad kann (weiterhin) zwar vom und am Pilotventilschieber freigegeben sein, kann aber vom Hauptventilschieber und am Hauptventilschieber geschlossen sein, vorzugsweise an der ersten Fluidöffnung. Der Volumenstrom am Einlass kann abgeschaltet oder reduziert werden.

### Siebenter Zustand:

In der Vollöffnungsstellung kann zwischen Einlass und Auslass ein nur sehr geringer hydraulischer Widerstand gegeben sein. Der Hauptventilschieber kann aus dieser Freigabestellung nicht verstellt werden, denn der am Einlass anstehende Fluiddruck oder zusätzlich der im ersten Ventilraum wirkende Fluiddruck oder zusätzlich die Hauptventilschieberfeder drücken den Hauptventilschieber in dessen (einfache) Freigabestellung und verhindern eine Verstellung. Zudem kann der Aktorkolben den Hauptventilschieber nicht aus der (einfachen) Freigabestellung drücken, denn der Aktorkolben ist in seiner Ausfahrstellung verrastet ist.

Der Elektromagnet kann (weiterhin) unbestromt sein. Der Hauptventilschieber kann (weiterhin) in einfacher Freigabestellung sein, vorzugsweise aufgrund der Hauptventilschieberfeder. Der Pilotventilschieber kann (weiterhin) in Freigabestellung sein, vorzugsweise aufgrund der Pilotventilschieberfeder. Das Verdrängungselement kann (weiterhin) in Verdrängungsstellung sein, vorzugsweise aufgrund der Pilotventilschieberfeder. Der Aktorkolben kann (weiterhin) in Ausfahrstellung sein, vorzugsweise aufgrund der Verrastung. Der erste Fluidpfad kann (weiterhin) vom Hauptventilschieber geöffnet sein und vom Einlass zum Auslass vollständig geöffnet sein. Der zweite Fluidpfad kann (weiterhin) vom und am Pilotventilschieber freigegeben sein, kann aber (weiterhin) vom Hauptventilschieber und am Hauptventilschieber geschlossen sein, vorzugsweise an der ersten Fluidöffnung. Der Volumenstrom am Einlass kann wieder angeschaltet oder gesteigert werden.

### Achter Zustand:

Der Volumenstrom am Einlass kann abgeschaltet und der Aktorkolben durch Verstellen des Verdrängungselements in dessen Entdrängungsstellung entriegelt werden. Das kann durch Bestromung des Elektromagneten erfolgen. Das Fluid, welches vom Aktorkolben bei dessen Rückstellung in die Einzugsstellung verdrängt wird, kann durch den vierten Ausgleichskanal strömen und/oder vom Hauptventilschieber in Richtung Auslass ausgeschoben werden. Durch einen großen Öffnungsquerschnitt des Hauptventilschieber in dieser Position ist denkbar, dass er nicht geschlossen wird. Ferner kann der hydraulische Widerstand beim Einziehen des Aktorkolbens sehr gering sein. Der Aktorkolben kann auf seinem Stellweg in seine Einzugsstellung am Hauptventilschieber anliegen und selbigen auf dem Stellweg mitnehmen.

Der Elektromagnet kann bestromt sein. Der Hauptventilschieber kann (weiterhin) in einfacher Freigabestellung sein, vorzugsweise aufgrund der Hauptventilschieberfeder. Der Pilotventilschieber kann in Schließstellung kommen, vorzugsweise durch die Elektromagnetbestromung. Das Verdrängungselement kann in Entdrängungsstellung kommen, vorzugsweise durch die Elektromagnetbestromung. Der Aktorkolben kann aus seiner Verrastung freikommen. Der erste Fluidpfad kann (weiterhin) vom Hauptventilschieber geöffnet sein und vom Einlass zum Auslass vollständig geöffnet sein. Der zweite Fluidpfad kann vom und am Pilotventilschieber geschlossen sein und kann zudem (weiterhin) vom Hauptventilschieber und am Hauptventilschieber geschlossen sein, vorzugsweise jeweils an der ersten Fluidöffnung. Der Volumenstrom am Einlass kann abgeschaltet oder reduziert werden.

### Neunter Zustand:

Der Hauptventilschieber kann dadurch vom Aktorkolben in dessen Vorschlusstellung verstellt werden. In der Vorschlusstellung ist die Flip-Flop-Schaltung wieder aktivierbar. Es ist ersichtlich, dass die Aktivierung und Deaktivierung der Flip-Flop-Schaltung durch die Stellung des Aktorkolbens erfolgt. Ist der Aktorkolben in seine Einzugsstellung eingefahren, drückt er den Hauptventilschieber in dessen Vorschlusstellung - die Flip-Flop-Schaltung ist aktivierbar. Ist der Aktorkolben in seine Ausfahrstellung ausgestellt und dort verrastet, ist er daran gehindert den Hauptventilschieber in dessen Vorschlusstellung zu drücken - die Flip-Flop-Schaltung ist deaktiviert / nicht aktivierbar. Der Aktorkolben kann vom Verdrängungselement wieder verrastet werden. Der Grundzustand ist wieder hergestellt. Der Elektromagnet kann weiterhin bestromt werden.

Der Elektromagnet kann (weiterhin) bestromt sein. Der Hauptventilschieber kann in seine Vorschlussstellung gelangen, vorzugsweise aufgrund des Anliegens am Aktorkolben bzw. dessen Aktorkolbenfeder. Der Pilotventilschieber kann (weiterhin) in Schließstellung sein, vorzugsweise durch die Elektromagnetbestromung. Das Verdrängungselement kann (weiterhin) in Entdrängungsstellung sein, vorzugsweise durch die Elektromagnetbestromung. Der Aktorkolben kann in einer Einzugsstellung gelangen, vorzugsweise aufgrund der Aktorkolbenfeder. Der erste Fluidpfad kann (weiterhin) vom Hauptventilschieber geöffnet sein und vom Einlass zum Auslass vollständig geöffnet sein. Der zweite Fluidpfad kann (weiterhin) vom und am Pilotventilschieber geschlossen sein, jedoch vom Hauptventilschieber und am Hauptventilschieber freigegeben sein. Der Volumenstrom am Einlass kann anstehen.

Hiernach kann der Hydraulikaktor in den ersten Zustand gelangen, beispielsweise hierdurch: Der Elektromagnet kann unbestromt geschaltet werden. Der Hauptventilschieber kann (weiterhin) in Vorschlussstellung sein. Der Pilotventilschieber kann in Freigabestellung gelangen, vorzugsweise durch die Pilotventilschieberfeder. Das Verdrängungselement kann in Verdrängungsstellung gelangen, vorzugsweise durch die Pilotventilschieberfeder. Der Aktorkolben kann (weiterhin) in Einzugsstellung sein, vorzugsweise aufgrund der Verrastung. Der erste Fluidpfad kann (weiterhin) vom Hauptventilschieber geöffnet sein und vom Einlass zum Auslass vollständig geöffnet sein. Der zweite Fluidpfad kann vom und am Pilotventilschieber freigegeben werden und/oder kann vom und am Hauptventilschieber (weiterhin) freigegeben sein. Der zweite Fluidpfad kann vom Einlass zum Auslass vollständig geöffnet sein. Der Volumenstrom am Einlass kann abgeschaltet oder reduziert werden.

Es sei darauf hingewiesen, dass die hierin beschriebenen Bauteile grundsätzlich als separate Bauteile zueinander offenbart sind. Auf einstückige Ausgestaltungen kann hingewiesen sein. Sollten Bauteile mehrfach offenbart sein, sollen Ausgestaltungen und Vorteile, die nur für eines der Bauteile beschrieben sind, gleichsam auch für die anderen entsprechenden Bauteile als in optionaler Weise offenbart gelten. Axial und Axialrichtung verlaufen parallel zur Längsachse. Radial und Radialrichtung verlaufen senkrecht zur Längsachse. Umfang und Umfangsrichtung verlaufen um die Längsachse herum.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 ein Hydraulikaktor in einem ersten Zustand,
Fig. 2 den Hydraulikaktor in einem zweiten Zustand,
Fig. 3 den Hydraulikaktor in einem dritten Zustand,
Fig. 4 den Hydraulikaktor in einem vierten Zustand,
Fig. 5 den Hydraulikaktor in einem fünften Zustand,
Fig. 6 den Hydraulikaktor in einem sechsten Zustand,
Fig. 7 den Hydraulikaktor in einem siebenten Zustand,
Fig. 8 den Hydraulikaktor in einem achten Zustand und
Fig. 9 den Hydraulikaktor in einem neunten Zustand

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

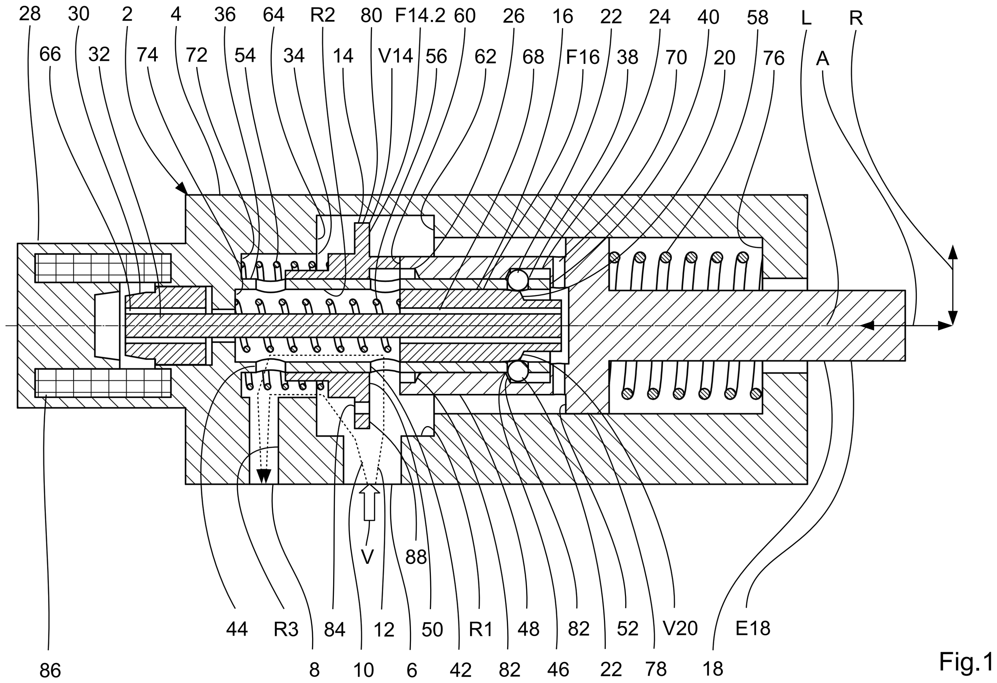

Die **Figuren 1 bis 9** zeigen einen einzigen Hydraulikaktor 2 in neun unterschiedlichen und zeitlich aufeinander folgenden Zuständen. Die Zustände der Figurenbeschreibung korrespondieren aus Gründen der einfachen Nachvollziehbarkeit mit den Zuständen der allgemeinen Erfindungsbeschreibung.

Nachstehend wird der gezeigte Hydraulikaktor 2 strukturell beschrieben.

Der Hydraulikaktor 2 ist von einer Längsachse L durchsetzt. Entlang der Längsachse L erstreckt sich eine Axialrichtung A. Senkrecht dazu verläuft eine Radialrichtung R.

Der Hydraulikaktor 2 umfasst ein Gehäuse 4 mit einem Einlass 6 und einem Auslass 8. Am Einlass 6 steht grundsätzlich ein Volumenstrom V an.

Ein erster Fluidpfad 10 erstreckt sich vom Einlass 6 zum Auslass 8 und ein zweiten Fluidpfad 12 verläuft vom Einlass 6 zum Auslass 8.

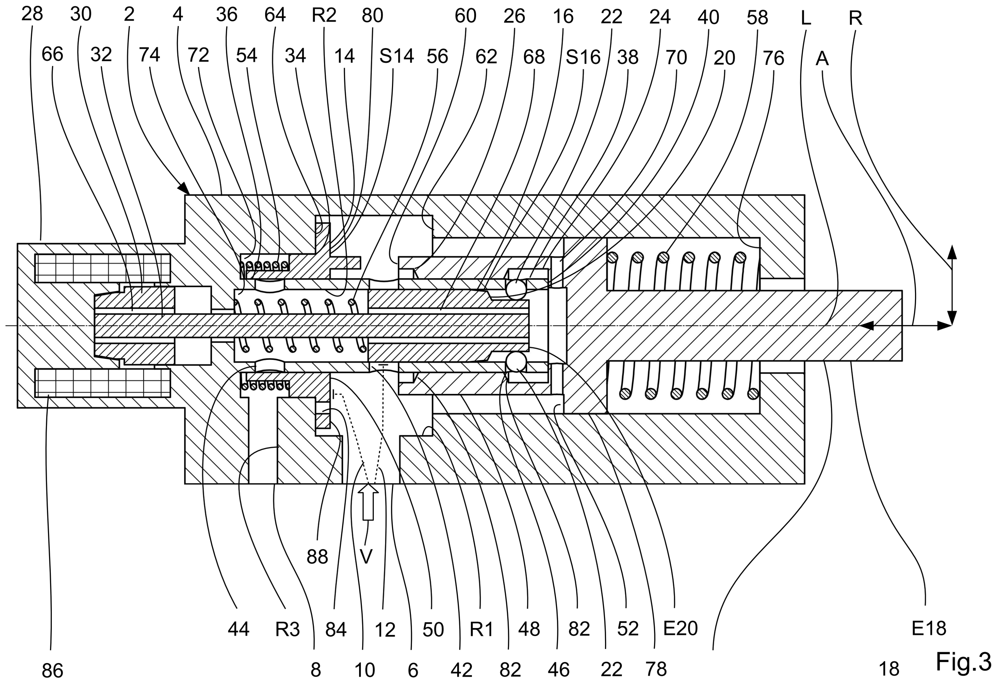

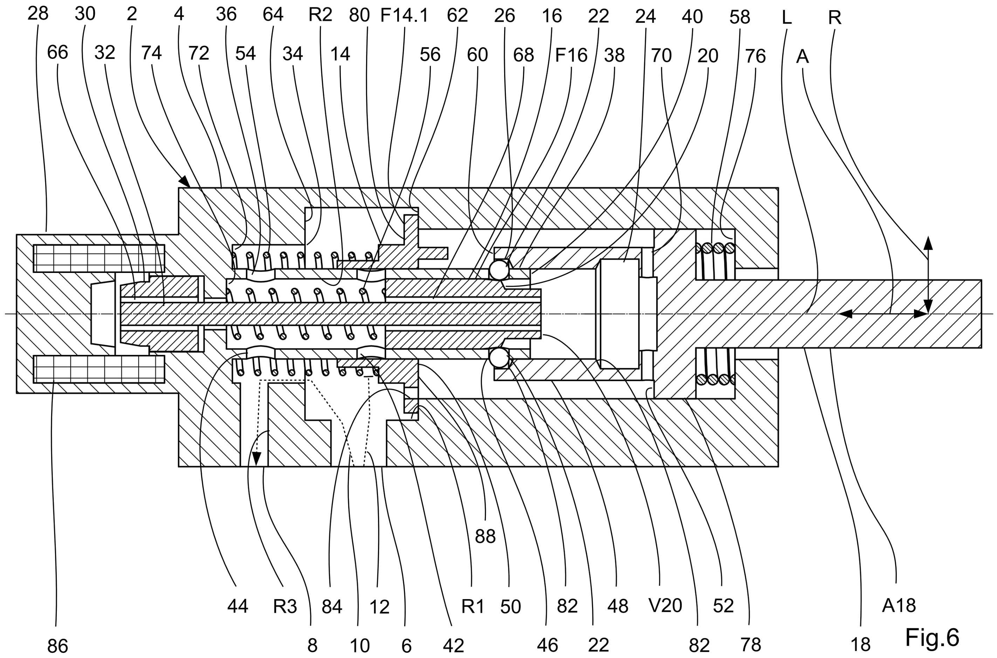

Der Hydraulikaktor 2 umfasst einen Hauptventilschieber 14, der entlang der Längsachse L zwischen einer einfachen Freigabestellung F14.1 (Fig. 6-8) verstellbar ist, in welcher der erste Fluidpfad 10 freigegeben und der zweite Fluidpfad 12 geschlossen ist. Der Hauptventilschieber 14 ist ferner in eine doppelte Freigabestellung F14.2 (Fig. 1,2,9) verstellbar, in welcher der erste Fluidpfad 10 und der zweite Fluidpfad 12 freigegeben sind. Der Hauptventilschieber 14 ist zudem in eine Schließstellung S14 (Fig. 3,4,5) verstellbar, in welcher der erste Fluidpfad 10 und der zweite Fluidpfad 12 geschlossen sind. Der Hauptventilschieber 14 umfasst eine Schließstellungsdruckfläche 88.

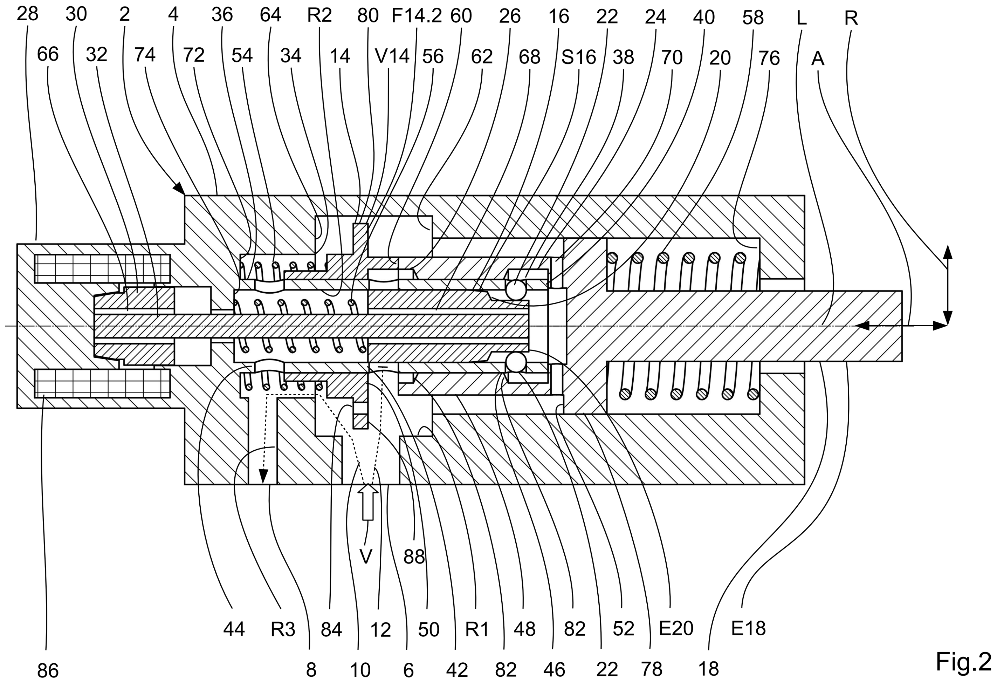

Der Hydraulikaktor 2 umfasst einen Pilotventilschieber 16, der koaxial mit dem Hauptventilschieber 14 angeordnet ist und entlang der Längsachse L in eine Freigabestellung F16 (Fig. 1,5-7) verstellbar ist, in welcher der zweite Fluidpfad (12) freigegeben ist. Der Pilotventilschieber 16 ist in eine Schließstellung S16 (Fig. 2-4,8,9) verstellbar, in welcher der zweite Fluidpfad 12 geschlossen ist.

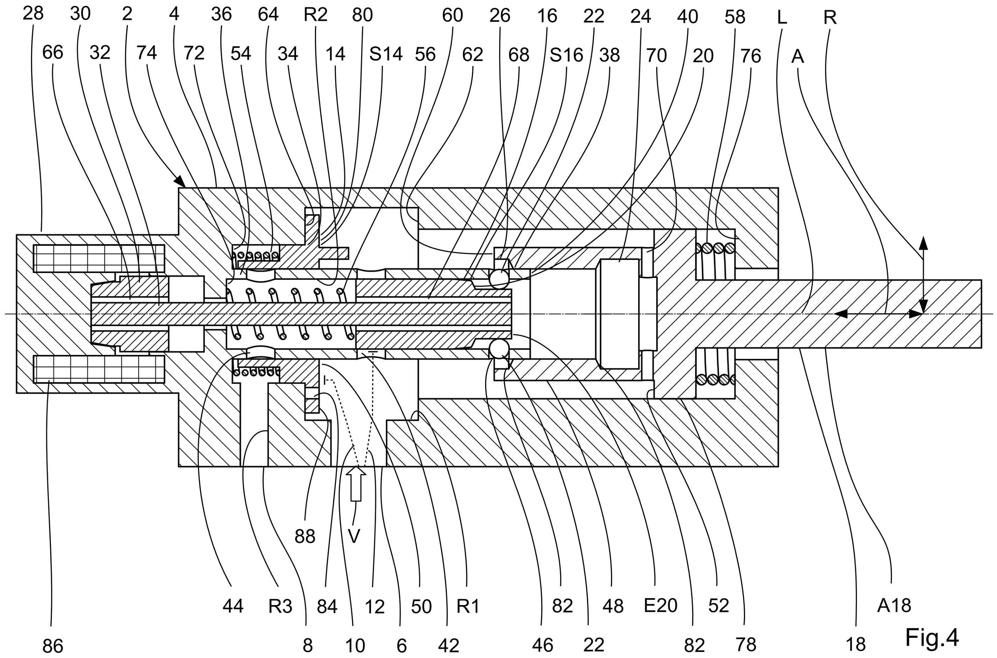

Der Hydraulikaktor 2 umfasst einen Aktorkolben 18, der koaxial mit dem Hauptventilschieber 14 angeordnet ist und entlang der Längsachse L durch aus dem Einlass 6 anstehenden Fluiddruck verstellbar ist zwischen einer Einzugsstellung E18 (Fig. 1-3,9) und eines Ausfahrstellung A18 (Fig. 4-8).

Der Hydraulikaktor 2 umfasst ein Verrastmittel 38, umfassend ein Verdrängungselement in Gestalt eines Konus 20 am Pilotventilschieber 16, zwei Rastaufnahme 24, 26 am Aktorkolben 18 und zwei Rastelemente als Kugeln 22. Die Kugeln 22 können vom Konus 20 in die jeweilige Rastaufnahme 24, 26 verdrängbar werden (Verdrängungsstellung V20 in Fig. 1,5-7), um den Aktorkolben 18 in Axialrichtung A zu verrasten. Der Konus 20 kann auch in eine Entdrängungsstellung E20 (Fig. 2-4,8,9) gebracht werden, in welcher die Kugeln 22 durch Ausdrängschrägen 82 der Rastaufnahmen 24, 26 aus selbigen gedrängt werden können.

Der Hydraulikaktor 2 umfasst einen Elektromagneten 28 in der Bauform eines Linearmagneten. Der Elektromagnet weist eine wahlweise bestrombare Spule 86, einen Magnetanker 30 und eine Ankerstange 32 auf. Der Elektromagnet 28, der Magnetanker 30 und die Ankerstange 32 sind koaxial mit dem Hauptventilschieber 14 angeordnet. Der Magnetanker 30 und die Ankerstange 32 sind entlang der Längsachse L verstellbar. Zwischen Magnetanker 30 und Ankerstange 32 ist ein erster Ausgleichskanal 66 verortet. Zwischen Ankerstange 32 und Pilotventilschieber ist ein zweiter Ausgleichskanal 68 verortet. Der Elektromagnet 28 bildet ein stirnseitiges Ende des Gehäuses 4.

Eine Steuerkante 34 ist vom Gehäuse 4 ausgebildet, welche mit dem Hauptventilschieber 14 den Volumenstrom des ersten Fluidpfads 10 einstellen kann.

Der Hydraulikaktor 2 umfasst eine Innenwandung in der Ausgestaltung einer hohlzylindrischen Innenhülse 36 innerhalb des Gehäuses 4. Die Innenhülse 36 führt über ihre Außenumfangsseite den Hauptventilschieber 14 und den Aktorkolben 18. Über ihre Innenumfangsseite führt die Innenhülse 36 den Pilotventilschieber 16. Die Innenhülse 36 weist einends einen Einzugsanschlag 40 für den Aktorkolben 18 auf. Anderenends geht die Innenhülse 36 einstückig in das Gehäuse 4 über. Die Innenhülse 36 weist eine erste Fluidöffnung 42 auf, welche den zweiten Fluidpfad 12 führt und vom Hauptventilschieber 14 und Pilotventilschieber 16 wahlweise geschlossen und geöffnet werden kann. Die Innenhülse 36 weist eine zweite Fluidöffnung 44 auf, welche den zweiten Fluidpfad 12 führt und vom Hauptventilschieber 14 wahlweise geschlossen und geöffnet werden kann. Die Innenhülse 36 weist zwei Rastöffnungen 46 auf, in welchen die Kugeln 22 aufgenommen sind.

Das Gehäuse 4 führt den Hauptventilschieber 14 entlang dessen Stellwegs teilweise, nämlich dann, wenn das Hauptventilschieber 14 die Steuerkante 34 passiert hat (Fig. 3-5). Der Aktorkolben 18 bildet einen ersten Hauptventilschieberanschlag 60 aus, an welchem der Hauptventilschieber 14 in seiner Vorschlusstellung V14 anliegt (Fig. 1). Das Gehäuse 4 bildet einen zweiten Hauptventilschieberanschlag 62 aus, an welchem der Hauptventilschieber 14 in seiner einfachen Freigabestellung F14.1 anliegt (Fig. 6-8). Das Gehäuse 4 bildet einen dritten Hauptventilschieberanschlag 64 aus, an welchem der Hauptventilschieber 14 in seiner doppelten Freigabestellung anliegt (Fig. 1,2,9). Das Gehäuse 4 bildet eine Abstützfläche 72 für eine Hauptventilschieberfeder 54 aus. Die Hauptventilschieberfeder 54 spannt den Hauptventilschieber 14 in dessen einfache Freigabestellung F14.1 oder gegen den vor zweiten Hauptventilschieberanschlag 62 vor. Das Gehäuse 4 bildet eine Abstützfläche 74 für eine Pilotventilschieberfeder 56 aus. Die Pilotventilschieberfeder 56 spannt den Pilotventilschieber 16 in dessen Freigabestellung F16 vor und auch den Konus 20 in dessen Verdrängungsstellung V20 vor. Das Gehäuse 4 bildet eine Abstützfläche 76 für eine Aktorkolbenfeder 58 aus. Die Aktorkolbenfeder 58 spannt den Aktorkolben 18 in dessen Einzugsstellung E18 vor. Am Gehäuse 4 sind Einlass 6 und Auslass 8 entlang der Längsachse L benachbart zueinander angeordnet. Im Gehäuse ist ein erster Ventilraum R1, ein zweiter Ventilraum R2 und ein dritter Ventilraum R3 ausgebildet.

Der Aktorkolben 18 weist einen Hülsenabschnitt 48 und einen Scheibenabschnitt 78 auf. Der Scheibenabschnitt 78 bildet eine Druckfläche 52 aus, die dem ersten ventilraum R1 exponiert ist. Innenumfangsseitig weist der Hülsenabschnitt 48 die Rastaufnahmen 24, 26 auf. Ferner weist der Hülsenabschnitt 48 einen dritten Ausgleichskanal 70 auf.

Der Hauptventilschieber 14 weist eine Durchströmungsöffnung 50 auf, welche den zweiten Fluidpfad 12 zur ersten Fluidöffnung 42 führt. Ferner weist der Hauptventilschieber 14 einen Anschlagsflansch 80 auf, der am zweiten Hauptventilschieberanschlag 62 und am dritten Hauptventilschieberanschlag 64 anliegen kann. Zudem weist der Hauptventilschieber 14 im Anschlagsflansch 80 einen vierten Ausgleichskanal 84 auf.

Nachstehend wird der gezeigte Hydraulikaktor 2 funktional beschrieben.

**Figur 1** zeigt einen erster Zustand. Der Hydraulikaktor 2 befindet sich in einem Grundzustand, in welchem der erste Fluidpfad 10 und der zweite Fluidpfad 12 geöffnet sind und der Aktorkolben 18 in seiner Einzugsstellung E18 ist. Der Aktorkolben 18 ist in seiner Einzugsstellung E18 durch das Verrastmittel 38 verrastet. Der Hauptventilschieber 14 liegt am ersten Hauptventilschieberanschlag 60 an und ist in seine Vorschlussstellung V14 verbracht, in welcher der Volumenstrom des ersten Fluidpfads 10 größer als der Volumenstrom des zweiten Fluidpfads 12 ist. Der Hauptventilschieber 14 liegt am Aktorkolben 16 an und ist daher axialdistanziert zu seinem zweiten Hauptventilschieberanschlag 62. Die Aktorkolbenfeder 58 drückt den Aktorkolben 18 auf den Hauptventilschieber 14 und gegen den Einzugsanschlag 40. Der Hydraulikaktor 2 befindet sich in einem Grundzustand. In diesem Zustand kann die Flip-Flop-Schaltung aktiviert werden.

**Figur 2** zeigt einen zweiten Zustand. Es erfolgt ein Bestromen der Spule 86 und somit ein Anziehen des Magnetanker 30 und der Ankerstange 32. Der damit verbundene Pilotventilschieber 16 verstellt sich entsprechend und aus seiner Freigabestellung F16 in seine Schließstellung S16, in welcher er die erste Fluidöffnung 42 schließt. Der zweite Fluidpfad 12 wird an der Stelle des Pilotventilschiebers 16 geschlossen. Der gesamte Volumenstrom V wird folglich über den Hauptventilschieber 14 oder durch den ersten Fluidpfad 10 geleitet. Durch die daraus resultierende höhere Druckdifferenz über den Hauptventilschieber 14 und die höhere Strömungskraft an der Steuerkante 34 des Hauptventilschiebers 14, kann dieser gegen die Kraft der Hauptventilschieberfeder 54 geschlossen werden. Mit dem Anziehen des Magnetankers 30 verstellt sich gleichsam das Verdrängungselement / der Konus 20 in die Entdrängungsstellung E20.

**Figur 3** zeigt einen dritten Zustand. Die Druckdifferenz und aus dem Einlass 6 anstehender Fluiddruck führt zu einem Verbringen des Hauptventilschiebers 14 in seine Schließstellung S14 am dritten Hauptventilschieberanschlag 64. Dadurch werden der erste Fluidpfad 10 und der zweite Fluidpfad 12 geschlossen. Die Verbindung zwischen Einlass 6 und Auslass 8 ist somit komplett blockiert. Am Einlass 6 und im ersten Ventilraum R1 steht weiterhin Fluiddruck an.

**Figur 4** zeigt einen vierten Zustand. Dieser Fluiddruck, der aufgrund der Blockade zum Auslass 8 den Hydraulikaktor 2 nicht durchströmen kann, drückt im ersten Ventilraum R1 gegen die Druckfläche 52 und schiebt den Aktorkolben 18 in seine Ausfahrstellung A18. Die Verstellung des Aktorkolbens 18 erfolgt gegen die Kraft der Aktorkolbenfeder 58.

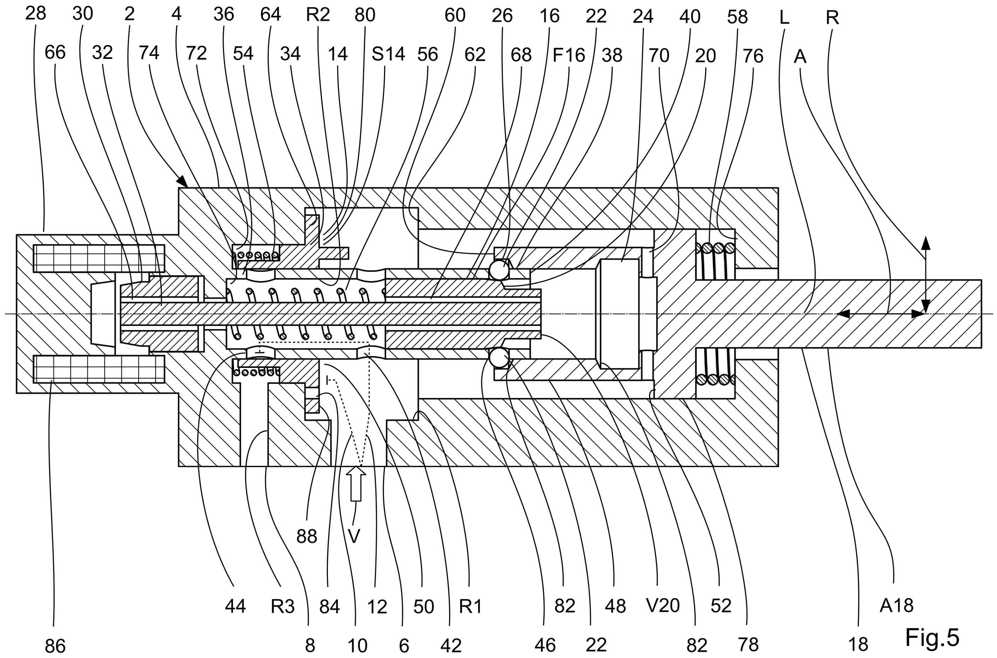

**Figur 5** zeigt einen fünften Zustand. Der Aktorkolben 18 ist in seine Ausfahrstellung A18 verstellt. Der Elektromagnet 28 wird stromlos geschaltet. Es erfolgt ein Verbringen des Pilotventilschiebers 16 aufgrund der Pilotventilfeder 56 aus seiner Schließstellung S16 in seine Freigabestellung F16. Der Pilotventilschieber 16 öffnet die erste Fluidöffnung 42 und gibt dort den zweiten Fluidpfad 12 wieder frei. Der zweite Fluidpfad 12 ist jedoch nur teilgeöffnet, denn das Hauptschieberventil 14 schließt noch immer die zweite Fluidöffnung 44 und somit dort den zweiten Fluidpfad 12. Auch der erste Fluidpfad 10 ist geschlossen. Mit Verstellung des Aktorkolbens 18 wird auch das Verdrängungselement in seine Verdrängungsstellung V20 verstellt. Die Kugeln 22 sind in die zweiten Rastaufnahmen 26 gedrückt. Der Aktorkolben 18 ist verrastet. Der Fluiddruck am Aktorkolben 18 kann sich nicht abbauen. Der Fluiddruck im ersten Ventilraum R1 drückt den Hauptventilschieber 14 in dessen Schließstellung S14. Die Verrastung des Aktorkolbens 18 ist von der hydraulischen Steuerung entkoppelt. Die Fluidverbindung zwischen Einlass 6 und Auslass 8 bleibt weiterhin geschlossen, obwohl der Pilotventilschieber 16 die erste Fluidöffnung 42 wieder freigibt. Diese Schaltung kann als Flip-Flop-Schaltung bezeichnet werden. Bei in Ausfahrstellung A18 verrastetem Aktorkolben A ist die Flip-Flop-Schaltung deaktiviert, vorzugsweise nachdem der Volumenstrom V kurzzeitig unterbrochen oder reduziert wurde.

**Figur 6** zeigt einen sechsten Zustand. Nun kann der Fluiddruck auf den Hauptventilschieber 14 unterbrochen werden. Das kann durch Abschalten des Volumenstroms V am Einlass 6 erfolgen. Der Wegfall des schließstellungsichernden Fluiddrucks im ersten Ventilraum R1 führt dazu, dass die Federkraft der Hauptventilschieberfeder 54 den Hauptventilschieber 14 aus seiner Schließstellung S14 bewegt. Vorliegend erfolgt die Verstellung in dessen einfache Freigabestellung F14.1. Auf seinem Stellweg passiert der Hauptventilschieber 14 die Stelle, an der er in Vorschlusstellung V14 verortet war. Der Stellweg endet für den Hauptventilschieber 14 am zweiten Hauptventilschieberanschlag 62. Dadurch ist ein maximal großer Strömungsquerschnitt freigeben.

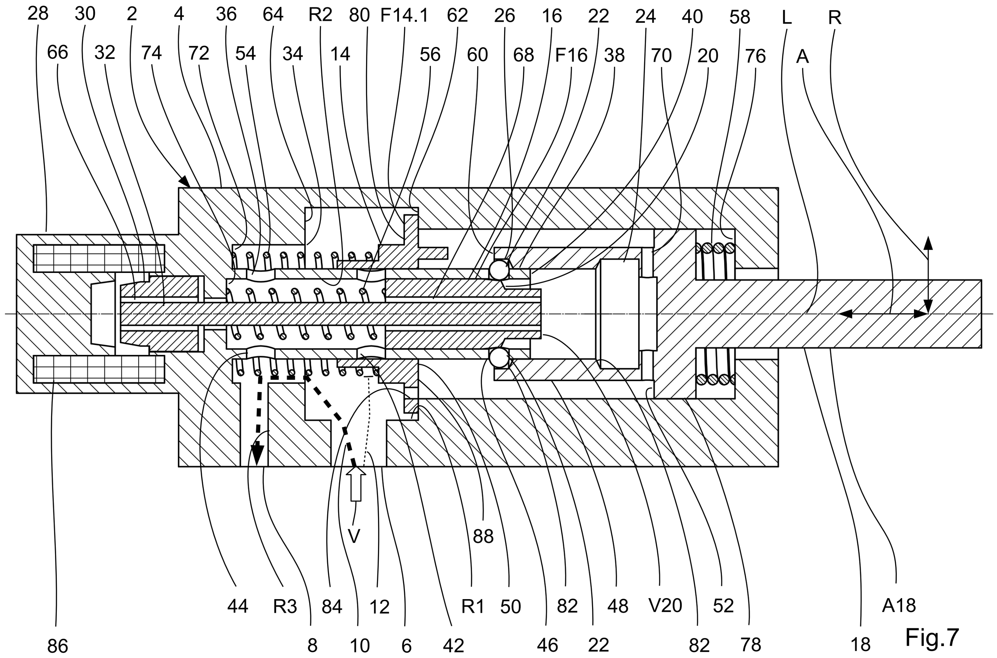

**Figur 7** zeigt einen siebenten Zustand. Der Hauptventilschieber 14 am zweiten Hauptventilschieberanschlag 62 gibt den ersten Fluidpfad 10 frei. Es erfolgt ein Durchströmen des Hydraulikaktors vom Einlass 6 zum Auslass 8 entlang des ersten Fluidpfads 10. In diesem Zustand ist die Vollöffnungsstellung des Hydraulikaktors 2 realisiert. Ist der Hydraulikaktor 2 eine Parksperre, so kann der siebente Zustand in einem Fahrbetrieb des Fahrzeugs vorliegen. In der Vollöffnungsstellung kann zwischen Einlass 6 und Auslass 8 ein nur sehr geringer hydraulischer Widerstand gegeben sein. Der Hauptventilschieber 14 kann aus dieser einfachen Freigabestellung F14.1 nicht verstellt werden, denn der am Einlass 6 anstehende Fluiddruck und der zusätzlich der im ersten Ventilraum R1 wirkende Fluiddruck und zusätzlich die Hauptventilschieberfeder 54 drücken den Hauptventilschieber 14 in dessen einfache Freigabestellung F14.1 und verhindern eine Verstellung daraus. Zudem kann der Aktorkolben 18 den Hauptventilschieber 14 nicht aus der einfachen Freigabestellung 14.1 drücken, denn der Aktorkolben 18 ist in seiner Ausfahrstellung A18 verrastet.

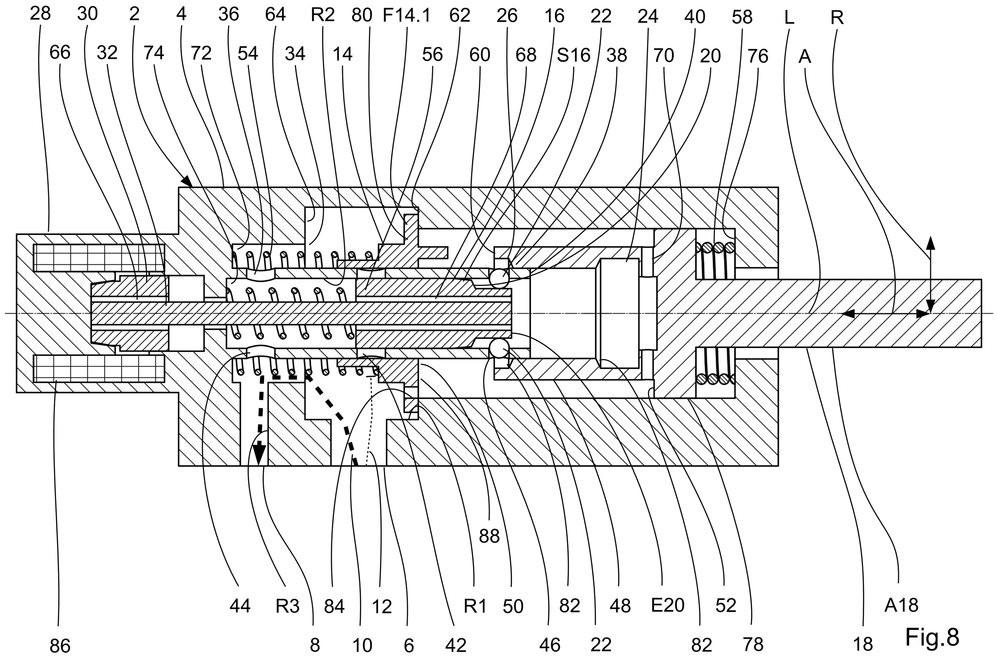

**Figur 8** zeigt einen achten Zustand. Der Elektromagnet wird bestromt. Dadurch wird der Pilotventilschieber 16 in seine Schließstellung S16 verstellt und gleichsam das Verdrängungselement / der Konus 20 in dessen Entdrängungsstellung E20 gebracht. Der Aktorkolben 18 ist entriegelt und längsverstellbar. Der Fluiddruck auf den Hauptventilschieber 14 wird unterbrochen. Das kann durch Abschalten des Volumenstroms V am Einlass 6 erfolgen. Der Wegfall des freigabestellungssichernden Fluiddrucks im ersten Ventilraum R1 führt dazu, dass der Druck gegen die Druckfläche 52 des Aktorkolbens 18 nachlässt und die Aktorkolbenfeder 58 den entriegelten Aktorkolben 18 in dessen Einzugsstellung E18 drückt. Das Fluid, welches vom Aktorkolben 18 bei dessen Rückstellung in die Einzugsstellung E18 verdrängt wird, kann einerseits durch den vierten Ausgleichskanal 84 und andererseits durch den dritten Ausgleichskanal 70, den zweiten Ausgleichskanal 68 und die zweite Fluidöffnung 44 strömen. Das Fluid wird zudem vom Hauptventilschieber 14 in Richtung Auslass 8 ausgeschoben. Der Aktorkolben 18 kommt auf seinem Stellweg in seine Einzugsstellung E18 in Anlage am Hauptventilschieber 14 und nimmt selbigen auf dem Stellweg gegen die Kraft der Hauptventilschieberfeder 54 mit. Der Hauptventilschieber 14 wird dadurch von seiner Anlage am zweiten Hauptventilschieberanschlag 62 abgehoben.

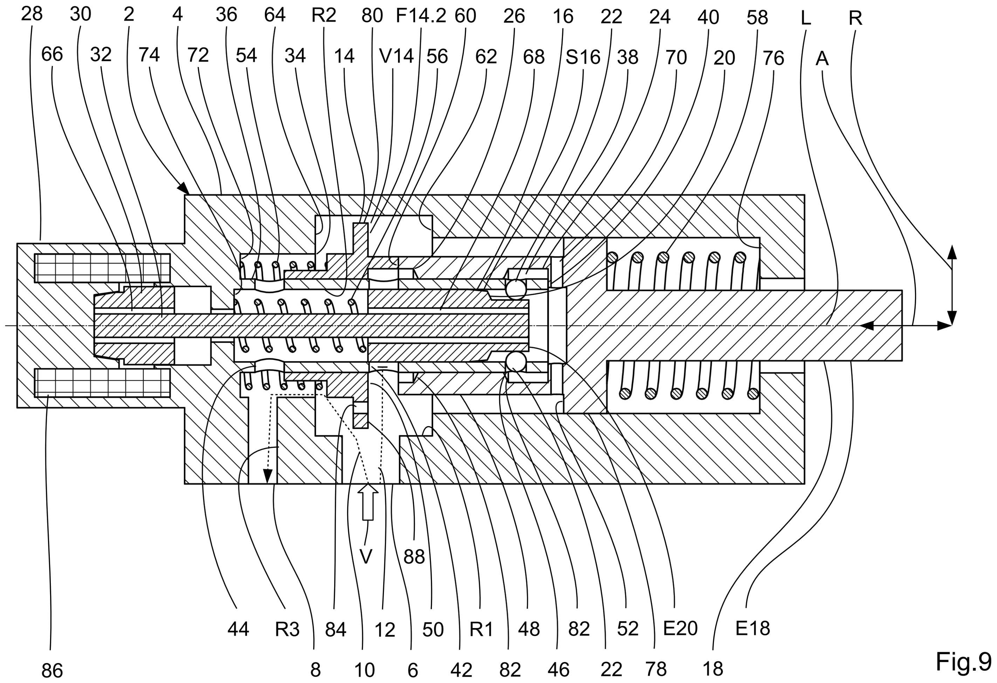

**Figur 9** zeigt einen neunten Zustand. Es erfolgt ein Verbringen des Aktorkolbens 18 in seine Einzugsstellung E18 und dadurch ein Verbringen des Hauptventilschiebers 14 in seine Vorschlussstellung V14. In der Vorschlusstellung V14 ist die Flip-Flop-Schaltung wieder aktivierbar. Die Bestromung des Elektromagneten 28 kann beendet werden. Es erfolgt ein Verbringen des Pilotventilschiebers 16 aufgrund der Pilotventilfeder 56 aus seiner Schließstellung S16 in seine Freigabestellung F16. Der Pilotventilschieber 16 öffnet die erste Fluidöffnung 42 und gibt dort den zweiten Fluidpfad 12 wieder frei. Der zweite Fluidpfad 12 ist nun durchgehen frei, denn das Hauptschieberventil 14 ist in Vorschlusstellung V14 gehalten - die zweite Fluidöffnung 44 ist offen. Mit Verstellung des Aktorkolbens 18 wird auch das Verdrängungselement in seine Verdrängungsstellung V20 verstellt. Die Kugeln 22 sind in die ersten Rastaufnahmen 24 gedrückt. Der Aktorkolben 18 ist verrastet. Grundzustand ist wieder hergestellt.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein. In den Rahmen der Erfindung fallen sämtliche Kombinationen aus zumindest zwei von den in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 2 | Hydraulikaktor | A | Axialrichtung |
| 4 | Gehäuse | A18 | Ausfahrstellung |
| 6 | Einlass | E18 | Einzugsstellung |
| 8 | Auslass | E20 | Entdrängungsstellung |
| 10 | erster Fluidpfad | F14.1 | einfache Freigabestellung |
| 12 | zweiter Fluidpfad | F14.2 | doppelte Freigabestellung |
| 14 | Hauptventilschieber | F16 | Freigabestellung |
| 16 | Pilotventilschieber | L | Längsachse |
| 18 | Aktorkolben | R | Radialrichtung |
| 20 | Konus | R1 | erster Ventilraum |
| 22 | Kugel | R2 | zweiter Ventilraum |
| 24 | erste Rastaufnahme | R3 | dritter Ventilraum |
| 26 | zweite Rastaufnahme | S14 | Schließstellung |
| 28 | Elektromagnet | S16 | Schließstellung |
| 30 | Magnetanker | V | Volumenstrom |
| 32 | Ankerstange | V14 | Vorschlussstellung |
| 34 | Steuerkante | V20 | Verdrängungsstellung |
| 36 | Innenhülse | | |
| 38 | Verrastmittel | | |
| 40 | Einzugsanschlag | | |
| 42 | erste Fluidöffnung | | |
| 44 | zweite Fluidöffnung | | |
| 46 | Rastöffnung | | |
| 48 | Hülsenabschnitt | | |
| 50 | Durchströmungsöffnung | | |
| 52 | Druckfläche | | |
| 54 | Hauptventilschieberfeder | | |
| 56 | Pilotventilschieberfeder | | |
| 58 | Aktorkolbenfeder | | |
| 60 | erster Hauptventilschieberanschlag | | |
| 62 | zweiter Hauptventilschieberanschlag | | |
| 64 | dritter Hauptventilschieberanschlag | | |
| 66 | erster Ausgleichskanal | | |
| 68 | zweiter Ausgleichskanal | | |
| 70 | dritter Ausgleichskanal | | |
| 72 | Abstützfläche | | |
| 74 | Abstützfläche | | |
| 76 | Abstützfläche | | |
| 78 | Scheibenabschnitt | | |
| 80 | Anschlagsflansch | | |
| 82 | Ausdrängschräge | | |
| 84 | vierter Ausgleichskanal | | |
| 86 | Spule | | |
| 88 | Schließstellungsdruckfläche | | |

## Patentansprüche

1. Hydraulikaktor (2), der von einer Längsachse (L) durchsetzt ist, umfassend
- eine Gehäuse (4) mit einem Einlass (6) und einem Auslass (8),
- einen ersten Fluidpfad (10) vom Einlass (6) zum Auslass (8),
- einen zweiten Fluidpfad (12) vom Einlass (6) zum Auslass (8),
- einen Hauptventilschieber (14),
der entlang der Längsachse (L) zwischen einer einfachen Freigabestellung (F14.1) verstellbar, in welcher der erste Fluidpfad (10) oder der zweite Fluidpfad (12) freigegeben und der jeweils andere Fluidpfad (10, 12) geschlossen ist, und/oder einer doppelten Freigabestellung (F14.2) verstellbar ist, in welcher der erste Fluidpfad (10) und der zweite Fluidpfad (12) freigegeben sind, und einer Schließstellung (S14) verstellbar ist, in welcher der erste Fluidpfad (10) und der zweite Fluidpfad (12) geschlossen sind, und
- einen Pilotventilschieber (16),
der koaxial mit dem Hauptventilschieber (14) ist und
entlang der Längsachse (L) zwischen einer Freigabestellung (F16), in welcher der zweite Fluidpfad (12) freigegeben ist, und einer Schließstellung (S16) verstellbar ist, in welcher der zweite Fluidpfad (12) geschlossen ist, und
- einen Aktorkolben (18),
der koaxial mit dem Hauptventilschieber (14) ist und
entlang der Längsachse (L) durch aus dem Einlass (6) anstehenden Fluiddruck verstellbar ist zwischen einer Einzugsstellung (E18) und eines Ausfahrstellung (A18).

2. Hydraulikaktor (2) nach Anspruch 1, **dadurch gekennzeichnet, dass** der Aktorkolben (18) in seiner Einzugsstellung (E18) am Hauptventilschieber (14) anliegt und ihn dadurch innerhalb dessen einfacher Freigabestellung (F14.1) und/oder doppelter Freigabestellung (F14.2) in eine Vorschlussstellung (V14) verbringen kann, vorzugsweise ist in Vorschlussstellung (V14) der Volumenstrom des ersten Fluidpfads (10) größer als der Volumenstrom des zweiten Fluidpfads (12), vorzugsweise aufgrund der Vorschlussstellung (V14).

3. Hydraulikaktor (2) nach einem der voranstehenden Ansprüche, **gekennzeichnet durch** ein Verrastmittel (38), umfassend
- ein Verdrängungselement, vorzugsweise einen Kegel oder Konus (20) und/oder vorzugsweise am Pilotventilschieber (16),
- zumindest eine Rastaufnahme (24, 26), vorzugsweise am Aktorkolben (18), und
- zumindest ein Rastelement, vorzugsweise eine Kugel (22),
- wobei das Rastelement von dem Verdrängungselement in die Rastaufnahme (24, 26) verdrängbar ist, um den Aktorkolben (18) in Axialrichtung (A)zu verrasten.

4. Hydraulikaktor (2) nach einem der voranstehenden Ansprüche, **gekennzeichnet durch** einen Elektromagneten (28), welcher den Pilotventilschieber (16) entlang der Längsachse (L) verstellen kann, vorzugsweise ist der Pilotventilschieber (16) mit dem Magnetanker (30) oder der Ankerstange (32) verbunden, vorzugsweise fest verbunden.

5. Hydraulikaktor (2) nach einem der voranstehenden Ansprüche, **gekennzeichnet durch** eine Steuerkante (34), die mit dem Hauptventilschieber (14) den Volumenstrom des ersten Fluidpfads (10) einstellen kann.

6. Hydraulikaktor (2) nach einem der voranstehenden Ansprüche, **gekennzeichnet durch** eine Innenwandung, vorzugsweise eine Innenhülse (36), innerhalb des Gehäuses (4), wobei die Innenwandung
- den Hauptventilschieber (14) führt und/oder
- den Pilotventilschieber (16) führt und/oder
- den Aktorkolben (18) führt und/oder
- einen Einzugsanschlag (40) für den Aktorkolben (18) aufweist und/oder
- eine erste Fluidöffnung (42) aufweist, welche den zweiten Fluidpfad (12) führt und vom Hauptventilschieber (14) und/oder Pilotventilschieber (16) geschlossen und geöffnet werden kann, und/oder
- eine zweite Fluidöffnung (44) aufweist, welche den zweiten Fluidpfad (12) führt und vom Hauptventilschieber (14) geschlossen und geöffnet werden kann, und/oder
- eine zumindest ein Rastöffnung (46) aufweist, in welcher das Rastmittel aufgenommen ist.

7. Hydraulikaktor (2) nach einem der voranstehenden Ansprüche, **dadurch gekennzeichnet, dass** das Gehäuse (4)
- den Hauptventilschieber (14) führt und/oder
- einen Hauptventilschieberanschlag (62, 64) für den Hauptventilschieber (14) aufweist und/oder
- eine Abstützfläche (72) für eine Hauptventilschieberfeder (54) ausbildet und/oder
- eine Abstützfläche (74) für eine Pilotventilschieberfeder (56) ausbildet und/oder
- eine Abstützfläche (76) für eine Aktorkolbenfeder (58) ausbildet und/oder
- den Einlass (6) und den Auslass (8) entlang der Längsachse (L) benachbart aufweist und/oder
- einen ersten Ventilraum (R1) und/oder einen zweiten Ventilraum (R2) und/oder einen dritten Ventilraum (R3) aufweist oder ausbildet und/oder
- eine/die Innenwandung oder Innenhülse (36) einstückig ausbildet.

8. Hydraulikaktor (2) nach einem der voranstehenden Ansprüche, **dadurch gekennzeichnet, das** der Aktorkolben (18)
- einen Hülsenabschnitt (48) aufweist und/oder
- einen Scheibenabschnitt (78) aufweist und/oder
- innenumfangsseitig die zumindest eine Rastaufnahme (24, 26) aufweist.

9. Hydraulikaktor (2) nach einem der voranstehenden Ansprüche, **dadurch gekennzeichnet, das** der Hauptventilschieber (14)
- eine Durchströmungsöffnung (50) aufweist, welche den zweiten Fluidpfad (12) führen kann, und/oder
- einen Anschlagsflansch (80) aufweist und/oder
- einen Ausgleichskanal (84) aufweist.

10. Betriebsverfahren für einen Hydraulikaktor (2),
- wobei Hydraulikaktor (2) gemäß einem der voranstehenden Ansprüche ausgebildet ist,
- umfassend die folgenden Schritte aus einem Grundzustand des Hydraulikaktors (2), in welchem der erste Fluidpfad (10) und der zweite Fluidpfad (12) geöffnet sind, der Aktorkolben (18) in seiner Einzugsstellung (E18) ist und der Hauptventilschieber (14) in seine Vorschlussstellung (V14) verbracht ist, in welcher der Volumenstrom des ersten Fluidpfads (10) größer als der Volumenstrom des zweiten Fluidpfads (12) ist,
- Verbringen des Pilotventilschiebers (16) aus seiner Freigabestellung (F16) in seine Schließstellung (S16) und dadurch Schließen des zweiten Fluidpfads (12),
- Verbringen des Hauptventilschiebers (14) durch aus dem Einlass (6) anstehenden Fluiddruck in seine Schließstellung (S14) und dadurch Schließen des ersten Fluidpfads (10) und des zweiten Fluidpfads (12),
- Verbringen des Aktorkolbens (18) durch aus dem Einlass (6) anstehenden Fluiddruck in seine Ausfahrstellung (A18),
- Verbringen des Pilotventilschiebers (16) aus seiner Schließstellung (S16) in seine Freigabestellung (F16) und dadurch Freigeben des zweiten Fluidpfads (12),
- Unterbrechen des Fluiddrucks auf den Hauptventilschieber (14) und Verstellen des Hauptventilschiebers (14) aus seiner Schließstellung (S14) in seine einfachen Freigabestellung (F14.1) oder doppelte Freigabestellung (F14.2),
- Durchströmen des Hydraulikaktors (2) vom Einlass (6) zum Auslass (8) entlang zumindest einem der beiden Fluidpfade (10, 12),
- Unterbrechen oder Verringern des Volumenstroms am Einlass (6) und Verbringen des Pilotventilschiebers (16) aus seiner Freigabestellung (F16) in seine Schließstellung (S16) und dadurch schließen des zweiten Fluidpfads (12),
- Verbringen des Aktorkolbens (18) in seine Einzugsstellung (E18) und dadurch Verbringen des Hauptventilschiebers (14) in seine Vorschlussstellung (V14).
